# EUROPEAN PATENT APPLICATION

(11) **EP 4 564 924 A1**
(43) Date of publication of application: **04.06.2025**
(21) Application number: 23849122.9
(22) Date of filing: 30.06.2023
(51) Int. Cl.: H04W 40/22

(54) **COMMUNICATION METHOD, COMMUNICATION APPARATUS AND COMMUNICATION SYSTEM**

(30) Priority: 04.08.2022 CN 202210934729
(71) Applicant: Huawei Technologies Co., Ltd., Shenzhen, Guangdong 518129 (CN)
(72) Inventor: XU, Ruixiong, Shenzhen, Guangdong 518129 (CN); PENG, Wenjie, Shenzhen, Guangdong 518129 (CN)
(74) Representative: Gill Jennings & Every LLP
(86) International application number: PCT/CN2023/104612
(87) International publication number: WO 2024/027412

(57) **Abstract**

Embodiments of this application provide a communication method, a communication apparatus, and a communication system. The communication method includes: A first device determines first hop count information, where the first hop count information indicates a quantity of relay devices of the first device, and the first device is connected to a network device via the relay device. The first device determines, based on the first hop count information, whether to send a first message, where the first message indicates the first device to provide a relay service. According to embodiments of this application, a better relay service can be provided for a remote device.

## Description

This application claims priority to Chinese Patent Application No. 202210934729.0, filed with the China National Intellectual Property Administration on August 4, 2022 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of communication technologies, and in particular, to a communication method, a communication apparatus, and a communication system.

### BACKGROUND

In a user-to-network relay (UE-to-Network Relay, U2N Relay) communication system, a remote device (a remote UE) may communicate with a network device via a relay device (a relay UE). The remote device communicates with the relay device through a sidelink (sidelink, SL), and a corresponding interface is referred to as PC5. The relay device is directly connected to the network device, that is, communicates with the network device through an air interface (for example, a Uu interface).

In a U2N relay multi-hop communication scenario, a remote device needs to communicate with a network device via a plurality of relay devices. Therefore, how to provide a better relay service for the remote device is an urgent problem to be resolved.

### SUMMARY

Embodiments of this application provide a communication method, a communication apparatus, and a communication system, to provide a better relay service for a remote device.

According to a first aspect, an embodiment of this application provides a communication method. The method may be performed by a first device, or may be performed by a component (for example, a chip or a circuit) of the first device. This is not limited herein. The method includes:
The first device determines first hop count information, where the first hop count information indicates a quantity of relay devices of the first device, and the first device is connected to a network device via the relay device. The first device determines, based on the first hop count information, whether to send a first message, where the first message indicates the first device to provide a relay service.

In this embodiment of this application, the first device determines, based on the first hop count information, whether to provide the relay service, to determine whether to send the first message. For example, when the first device can provide the relay service, the first device determines to send the first message, so that a remote device can select the first device as a relay device based on the first message. When the first device cannot provide the relay service, the first device determines not to send the first message, so that a remote device does not select the first device as a relay device. When the quantity of relay devices of the first device is large, a transmission delay of data sent by the first device to the network device is large. As a result, the first device is not suitable to serve as the relay device to forward data for the remote device. Therefore, the first device may determine, based on the first hop count information, whether the first device can provide the relay service, to avoid an excessively large transmission delay of transmitting data of the remote device to the network device when the first device forwards the data for the remote device, and ensure a small transmission delay of transmitting the data of the remote device to the network device when the first device forwards the data for the remote device, so that the first device can provide a better relay service for the remote device.

In a possible implementation, the first message includes the first hop count information.

In this embodiment of this application, the first device includes the first hop count information in the sent first message, to notify the remote device of the quantity of relay devices of the first device, so that the remote device can determine, based on the first hop count information, whether to select the first device as the relay device. Therefore, the remote device can select an appropriate relay device to connect to the network device.

In a possible implementation, that the first device determines, based on the first hop count information, whether to send a first message includes:
The first device determines, based on the first hop count information and a first threshold, whether to send the first message.

In this embodiment of this application, the first threshold may be a hop count threshold of the first device. The first device may determine, based on a result of comparing the first hop count information with the first threshold, whether to provide the relay service. For example, when the first hop count information is less than the first threshold, the first device determines to provide the relay service, and determines to send the first message. When the first hop count information is greater than or equal to the first threshold, the first device determines not to provide the relay service, and determines not to send the first message. In this embodiment of this application, whether the first device provides the relay service is determined based on the first hop count information and the first threshold, and the transmission delay of transmitting the data of the remote device to the network device when the first device provides the relay service for the remote device can be effectively controlled by controlling the first threshold, so that the first device can provide a better relay service for the remote device.

In a possible implementation, that the first device determines, based on the first hop count information and a first threshold, whether to send the first message includes:
The first device determines, based on a result of comparing the first hop count information with the first threshold and a result of comparing first signal quality with a second threshold, whether to send the first message, where the first signal quality is signal quality of a communication link between the first device and a second device, and the second device is a relay device of the first device.

In this embodiment of this application, the communication link between the first device and the second device may be a PC5 link. The first device may determine, based on signal quality of the PC5 link and the first hop count information, whether to provide the relay service, to avoid a case in which the data of the remote device cannot be transmitted to the network device because the signal quality of the communication link between the first device and the second device is poor when the first device provides the relay service for the remote device, and ensure service quality when the first device provides the relay service for the remote device.

In a possible implementation, that the first device determines, based on a result of comparing the first hop count information with the first threshold and a result of comparing first signal quality with a second threshold, whether to send the first message includes:
When the first hop count information is greater than the first threshold and the first signal quality is greater than the second threshold, the first device determines to send the first message; or when the first hop count information is less than the first threshold or the first signal quality is less than the second threshold, the first device determines not to send the first message.

In this embodiment of this application, when the first hop count information is greater than the first threshold and the first signal quality is greater than the second threshold, the first device determines to provide the relay service and send the first message. When the first hop count information is less than the first threshold or the first signal quality is less than the second threshold, the first device determines not to provide the relay service and send the first message. Therefore, the case in which the data of the remote device cannot be transmitted to the network device because the signal quality of the communication link between the first device and the second device is poor when the first device provides the relay service for the remote device can be avoided, and the service quality when the first device provides the relay service for the remote device can be ensured.

In a possible implementation, the method further includes:
The first device receives a second message sent by the remote device, where the second message includes the first threshold, and the second message is for requesting the relay service.

In this embodiment of this application, the first threshold is a maximum hop count that can be accepted by the remote device. When requesting the relay service by using the second message, the remote device includes the first threshold in the second message, so that the first device can determine, based on the first threshold, whether the first device can provide the relay service for the remote device. When the first device can be the remote device, the first device sends the first message, to avoid a case in which the remote device incorrectly selects the first device as the relay device when the first device sends the first message if the first device cannot satisfy a requirement of the remote device on a hop count.

In a possible implementation, the first device forwards data for the remote device, a first unicast connection and a second unicast connection exist between the first device and the second device, the first unicast connection is for transmitting data of the remote device, and the second unicast connection is for transmitting data of the first device.

In this embodiment of this application, after setting up a unicast connection to the remote device, the first device may set up the first unicast connection for transmitting the data of the remote device. In a subsequent process in which the first device forwards data for the remote device, the first device forwards the data of the remote device to the second device through the first unicast connection, so that the second device can determine, based on the unicast connection through which the data is received, whether the data belongs to the first device or the remote device.

In a possible implementation, the first device forwards data for the remote device, bearers between the first device and the second device include a first bearer and a second bearer, the first bearer is for transmitting data of the remote device, and the second bearer is for transmitting data of the first device.

In this embodiment of this application, the first bearer may be a radio link layer control protocol (radio link control, RLC) bearer. After the first device sets up a unicast connection to the remote device, the first device and the second device may set up the first bearer based on a configuration of the network device, and transmit the data of the remote device through the first bearer. For example, after receiving the data of the remote device, the first device may forward the data to the second device through the first bearer, so that the second device can determine, based on the bearer through which the data is received, that the data belongs to the remote device.

In a possible implementation, the first device sends a third message to a second device, where the third message includes a first identifier of a remote device, and the first identifier indicates the second device to forward data for the remote device.

In this embodiment of this application, the first identifier of the remote device is for enabling the relay service of the remote device to distinguish the data of the remote device and forward the data for the remote device. After determining the first identifier of the remote device, the first device may send the first identifier to the second device by using the third message, so that the second device can distinguish the data of the remote device and forward the data for the remote device.

In a possible implementation, the first device receives a fourth message sent by the network device, where the fourth message includes the first identifier of the remote device, and the first identifier indicates the first device to forward data for the remote device.

In this embodiment of this application, the first device may determine the first identifier of the remote device based on the fourth message sent by the network device, to forward data for the remote device based on the first identifier.

In a possible implementation, the first device is a relay device of a third device, and the third device is a relay device of the remote device.

In a possible implementation, the method further includes:
The first device receives a fifth message sent by the remote device, where the fifth message includes a paging identifier of the remote device, and the paging identifier indicates the first device to monitor paging for the remote device. The first device sends a sixth message to the network device, where the sixth message is generated based on the fifth message, and the sixth message includes a first identifier and the paging identifier of the remote device.

In this embodiment of this application, the first device is the relay device of the remote device, to be specific, the remote device is connected to the network device via the first device. The remote device may indicate, by using the fifth message, the first device to monitor paging for the remote device. After receiving the fifth message, the first device may report the first identifier and the paging identifier of the remote device to the network device, so that when paging the remote device, the network device can directly send a paging message to the first device without broadcasting the paging message, to improve paging efficiency.

In a possible implementation, the method further includes:
The first device receives a seventh message, where the seventh message is for paging the remote device, and the seventh message includes the first identifier and the paging identifier. The first device forwards the seventh message to the remote device based on the first identifier.

In this embodiment of this application, the seventh message may be a radio resource control (radio resource control, RRC) message, and an adaptation layer of the seventh message carries the first identifier of the remote device. When determining to page the remote device, the network device may directly send the seventh message to the first device. After receiving the seventh message, the first device forwards the seventh message to the remote device based on the first identifier, so that the first device helps the remote device monitor paging.

In a possible implementation, the seventh message is further for paging a first relay device. The first relay device is a relay device of the remote device, and the remote device is connected to the network device via the first relay device.

In this embodiment of this application, the first relay device is in an RRC idle state or an RRC inactive state. When the remote device is in an RRC connected state, the relay device of the remote device also needs to be in the RRC connected state, to help forward data for the remote device. Therefore, the network device may page the first relay device by using the seventh message, so that the first relay device can quickly enter the RRC connected state.

In a possible implementation, that a first device determines first hop count information includes:
The first device receives an eighth message sent by the second device, where the eighth message includes second hop count information, and the second hop count information indicates a quantity of relay devices of the second device. The first device determines the first hop count information based on the second hop count information.

In this embodiment of this application, the eighth message may be a discovery message sent by the second device, and the second device may include the second hop count information in the discovery message, so that the first device can directly determine the first hop count information when determining to use the second device as the relay device.

According to a second aspect, an embodiment of this application provides a communication method. The method may be performed by a remote device, or may be performed by a component (for example, a chip or a circuit) of the remote device. This is not limited herein. The method includes:
The remote device receives a first message sent by a first device, where the first message includes first hop count information, the first hop count information is for identifying a quantity of relay devices of the first device, and the first device is connected to a network device via the relay device. The remote device determines, based on the first hop count information, to set up a unicast connection to the first device.

In this embodiment of this application, the remote device may determine the quantity of relay devices of the first device based on the first hop count information, and determine whether to select the first device as a relay device. When determining to select the first device as the relay device, the remote device sets up a unicast connection to the first device. The remote device may determine, based on the first hop count information, whether to select the first device as the relay device, to avoid an excessively large transmission delay of transmitting data of the remote device to the network device when the remote device selects the first device as the relay device, so that the remote device can select a better path to connect to the network device, and the remote device can have a better relay service.

In a possible implementation, the first hop count information is less than a first threshold, and the method further includes:
The remote device sends a second message, where the second message is for requesting a relay service, and the second message includes the first threshold.

In this embodiment of this application, the first threshold may be a maximum hop count that can be accepted by the remote device. When requesting the relay service by using the second message, the remote device includes the first threshold in the second message, so that the first device can determine, based on the first threshold, whether the first device can provide the relay service for the remote device.

In a possible implementation, the first threshold is determined based on a requirement on a delay of transmitting data of the remote device to the network device.

In this embodiment of this application, a higher requirement on the delay of transmitting the data of the remote device to the network device indicates a smaller first threshold, and a lower requirement on the delay indicates a larger first threshold. The remote device determines the first threshold based on the requirement on the delay, to ensure that a delay of transmitting the data of the remote device to the network device can satisfy the requirement on the delay.

In a possible implementation, the method further includes:
The remote device sends a fifth message to the first device, where the fifth message includes a paging identifier of the remote device, and the paging identifier indicates the first device to monitor paging for the remote device.

In this embodiment of this application, the remote device is in an RRC idle state or an RRC inactive state. When the remote device needs the first device to help monitor paging, the remote device uploads the paging identifier of the remote device to the first device by using the fifth message, so that the first device can monitor paging for the remote device based on the paging identifier.

In a possible implementation, the method further includes:
The remote device receives a seventh message sent by the first device, where the seventh message includes the paging identifier, and the seventh message is for paging the remote device.

In this embodiment of this application, after receiving the seventh message, the remote device enters an RRC connected state, so that the first device monitors paging for the remote device.

In a possible implementation, the seventh message is further for paging a first relay device. The first relay device is a relay device of the remote device, and the remote device is connected to the network device via the first relay device.

In this embodiment of this application, the first relay device is in the RRC idle state or the RRC inactive state. When the remote device is in the RRC connected state, the relay device of the remote device also needs to be in the RRC connected state, to help forward data for the remote device. Therefore, the network device may page the first relay device by using the seventh message, so that the first relay device can quickly enter the RRC connected state.

According to a third aspect, an embodiment of this application provides a communication method. The method may be performed by a remote device, or may be performed by a component (for example, a chip or a circuit) of the remote device. This is not limited herein. The method includes:
A network device receives a sixth message sent by a first device, where the sixth message includes a first identifier and a paging identifier of a remote device. The network device sends a seventh message to the first device based on the first identifier, where the seventh message is for paging the remote device, and the seventh message includes the first identifier and the paging identifier.

In this embodiment of this application, the first device may report the first identifier and the paging identifier of the remote device to the network device by using the sixth message. When the network device determines to page the remote device, the network device may directly send the seventh message to the first device based on the first identifier without broadcasting a paging message, so that the remote device can be quickly paged, thereby improving paging efficiency.

In a possible implementation, the seventh message is further for paging a first relay device. The first relay device is a relay device of the remote device, and the remote device is connected to the network device via the first relay device.

In this embodiment of this application, the first relay device is in the RRC idle state or the RRC inactive state. When the remote device is in an RRC connected state, the relay device of the remote device also needs to be in the RRC connected state, to help forward data for the remote device. Therefore, the network device may page the first relay device by using the seventh message, so that the first relay device can quickly enter the RRC connected state.

In a possible implementation, the method further includes: The network device sends a fourth message to the first device, where the fourth message includes the first identifier of the remote device, and the first identifier indicates the first device to forward data for the remote device.

In this embodiment of this application, the network device may allocate the first identifier to the remote device, and send the first identifier to the first device by using the fourth message, so that the first device can distinguish data of the remote device based on the first identifier, and forward the data for the remote device.

In a possible implementation, the first device is a relay device of a third device, and the third device is a relay device of the remote device.

In this embodiment of this application, the fourth message may be an RRC reconfiguration message, the remote device sets up a unicast connection to the third device, and the third device sets up a unicast connection to the first device. The network device may send the first identifier of the remote device to the first device by using the RRC reconfiguration message, so that the first device can quickly learn of the first identifier of the remote device.

According to a fourth aspect, an embodiment of this application provides a communication method. The method may be performed by a second device, or may be performed by a component (for example, a chip or a circuit) of the second device. This is not limited herein. The method includes:
The second device receives a third message sent by a first device, where the third message includes a first identifier of a remote device, the first identifier indicates the second device to forward data for the remote device, the second device is a relay device of the first device, and the first device is a relay device of the remote device. The second device records the first identifier.

In this embodiment of this application, the second device may determine the first identifier of the remote device and a correspondence between the first identifier and a route based on the third message, so that the second device can route data of the remote device to a correct path based on the correspondence between the first identifier and the route.

In a possible implementation, the first device forwards data for the remote device, a first unicast connection and a second unicast connection exist between the first device and the second device, the first unicast connection is for transmitting data of the remote device, and the second unicast connection is for transmitting data of the first device.

In a possible implementation, the first device forwards data for the remote device, bearers between the first device and the second device include a first bearer and a second bearer, the first bearer is for transmitting data of the remote device, and the second bearer is for transmitting data of the first device.

In a possible implementation, the method further includes: The second device sends an eighth message, where the eighth message includes second hop count information, and the second hop count information indicates a quantity of relay devices of the second device.

In this embodiment of this application, the eighth message may be a discovery message sent by the second device. When determining that the second device can provide a relay service, the second device sends the eighth message, where the eighth message carries the second hop count information, so that a surrounding device can select the second device as a relay device based on the second hop count information.

According to a fifth aspect, an embodiment of this application provides a communication apparatus, configured to perform the method in any one of the first aspect or the possible implementations. The communication apparatus includes a unit that performs the method in any one of the first aspect or the possible implementations.

According to a sixth aspect, an embodiment of this application provides a communication apparatus, configured to perform the method in any one of the second aspect or the possible implementations. The communication apparatus includes a unit that performs the method in any one of the second aspect or the possible implementations.

According to a seventh aspect, an embodiment of this application provides a communication apparatus, configured to perform the method in any one of the third aspect or the possible implementations. The communication apparatus includes a unit that performs the method in any one of the third aspect or the possible implementations.

According to an eighth aspect, an embodiment of this application provides a communication apparatus, configured to perform the method in any one of the fourth aspect or the possible implementations. The communication apparatus includes a unit that performs the method in any one of the fourth aspect or the possible implementations.

According to a ninth aspect, an embodiment of this application provides a communication apparatus. The communication apparatus includes a processor, configured to perform the method in any one of the first aspect or the possible implementations. Alternatively, the processor is configured to execute a program stored in a memory. When the program is executed, the method in any one of the first aspect or the possible implementations is performed.

In a possible implementation, the memory is located outside the communication apparatus.

In a possible implementation, the memory is located in the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive or send a signal.

According to a tenth aspect, an embodiment of this application provides a communication apparatus. The communication apparatus includes a processor, configured to perform the method in any one of the second aspect or the possible implementations. Alternatively, the processor is configured to execute a program stored in a memory. When the program is executed, the method in any one of the second aspect or the possible implementations is performed.

In a possible implementation, the memory is located outside the communication apparatus.

In a possible implementation, the memory is located in the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive or send a signal.

According to an eleventh aspect, an embodiment of this application provides a communication apparatus. The communication apparatus includes a processor, configured to perform the method in any one of the third aspect or the possible implementations. Alternatively, the processor is configured to execute a program stored in a memory. When the program is executed, the method in any one of the third aspect or the possible implementations is performed.

In a possible implementation, the memory is located outside the communication apparatus.

In a possible implementation, the memory is located in the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive or send a signal.

According to a twelfth aspect, an embodiment of this application provides a communication apparatus. The communication apparatus includes a processor, configured to perform the method in any one of the fourth aspect or the possible implementations. Alternatively, the processor is configured to execute a program stored in a memory. When the program is executed, the method in any one of the fourth aspect or the possible implementations is performed.

In a possible implementation, the memory is located outside the communication apparatus.

In a possible implementation, the memory is located in the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive or send a signal.

According to a thirteenth aspect, an embodiment of this application provides a communication apparatus. The communication apparatus includes a logic circuit and an interface, and the logic circuit is coupled to the interface. The logic circuit is configured to determine first hop count information, and determine whether to send a first message.

It may be understood that, for descriptions of the first hop count information and the first message, refer to the method in any one of the first aspect or the possible implementations. Details are not described herein again.

According to a fourteenth aspect, an embodiment of this application provides a communication apparatus. The communication apparatus includes a logic circuit and an interface, and the logic circuit is coupled to the interface. The interface is configured to input a first message; and the logic circuit is configured to determine to set up a unicast connection to a first device.

It may be understood that, for descriptions of the first message, refer to the method in any one of the second aspect or the possible implementations. Details are not described herein again.

According to a fifteenth aspect, an embodiment of this application provides a communication apparatus. The communication apparatus includes a logic circuit and an interface, and the logic circuit is coupled to the interface. The interface is configured to input a sixth message and output a seventh message.

It may be understood that, for descriptions of the sixth message and the seventh message, refer to the method in any one of the third aspect or the possible implementations. Details are not described herein again.

According to a sixteenth aspect, an embodiment of this application provides a communication apparatus. The communication apparatus includes a logic circuit and an interface, and the logic circuit is coupled to the interface. The interface is configured to input a third message; and the logic circuit is configured to record a first identifier.

It may be understood that, for descriptions of the third message and the first identifier, refer to the method in any one of the second aspect or the possible implementations. Details are not described herein again.

According to a seventeenth aspect, an embodiment of this application provides a computer-readable storage medium. The computer-readable storage medium is configured to store a computer program. When the computer program is run on a computer, the method in any one of the first aspect or the possible implementations of the first aspect, the method in any one of the second aspect or the possible implementations of the second aspect, the method in any one of the third aspect or the possible implementations of the third aspect, or the method in any one of the fourth aspect or the possible implementations of the fourth aspect is performed.

According to an eighteenth aspect, an embodiment of this application provides a computer program product. The computer program product includes a computer program or computer code. When the computer program or the computer code is run on a computer, the method in any one of the first aspect or the possible implementations of the first aspect, the method in any one of the second aspect or the possible implementations of the second aspect, the method in any one of the third aspect or the possible implementations of the third aspect, or the method in any one of the fourth aspect or the possible implementations of the fourth aspect is performed.

According to a nineteenth aspect, an embodiment of this application provides a communication system. The communication system includes, but is not limited to, at least one of the following: a first device, a remote device, a second device, and a network device. The first device is configured to perform the method in any one of the first aspect or the possible implementations of the first aspect, the remote device is configured to perform the method in any one of the second aspect or the possible implementations of the second aspect, the network device is configured to perform the method in any one of the third aspect or the possible implementations of the third aspect, and the second device is configured to perform the method in any one of the fourth aspect or the possible implementations of the fourth aspect.

According to a twentieth aspect, an embodiment of this application provides a chip or chip system. The chip or chip system includes a processor, configured to perform the methods in the first aspect to the fourth aspect or any method in the possible implementations of the first aspect to the fourth aspect.

### BRIEF DESCRIPTION OF DRAWINGS

The following describes the accompanying drawings used in embodiments of this application.
FIG. 1 is a diagram of an architecture of a communication system according to an embodiment of this application;
FIG. 2 is a diagram of a control plane protocol architecture in sidelink communication according to an embodiment of this application;
FIG. 3A is a diagram of a scenario of a discovery process according to an embodiment of this application;
FIG. 3B is a diagram of a scenario of another discovery process according to an embodiment of this application;
FIG. 4 is a diagram of a structure of a communication system according to an embodiment of this application;
FIG. 5 is a diagram of a control plane protocol architecture according to an embodiment of this application;
FIG. 6 is a diagram of a user plane protocol architecture according to an embodiment of this application;
FIG. 7 is a diagram of interaction of setting up a connection by a remote device according to an embodiment of this application;
FIG. 8 is an example of a U2N relay multi-hop communication system according to an embodiment of this application;
FIG. 9 is a diagram of interaction of a communication method according to an embodiment of this application;
FIG. 10 is a diagram of interaction of another communication method according to an embodiment of this application;
FIG. 11 is a diagram of interaction of still another communication method according to an embodiment of this application;
FIG. 12 is a diagram of interaction of still another communication method according to an embodiment of this application;
FIG. 13 is a diagram of interaction of still another communication method according to an embodiment of this application;
FIG. 14 is a diagram of interaction of still another communication method according to an embodiment of this application;
FIG. 15 is a diagram of a structure of a communication apparatus according to an embodiment of this application;
FIG. 16 is a diagram of a structure of another communication apparatus according to an embodiment of this application; and
FIG. 17 is a diagram of a structure of still another communication apparatus according to an embodiment of this application.

### DESCRIPTION OF EMBODIMENTS

In the specification, the claims, and the accompanying drawings of this application, the terms "first", "second", and the like are merely intended to distinguish between different objects, but do not limit a sequence, a time sequence, a priority, or an importance degree of a plurality of objects. In embodiments of this application, "a plurality of" refers to two or more. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices. In addition, the character "/" generally indicates an "or" relationship between the associated objects.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described herein may be combined with other embodiments.

A terminal device in embodiments of this application may be a user equipment (user equipment, UE), an access terminal, a subscriber unit, a subscriber station, a mobile station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

A network device in embodiments of this application may be a device that accesses a terminal device to a wireless network, and may be specifically a base station. There may be various forms of base stations, for example, a macro base station, a micro base station (also referred to as a small cell), a relay station, and an access point. The base station may be specifically an access point (access point, AP) in a wireless local area network (wireless local area network, WLAN), a base transceiver station (base transceiver station, BTS) in a global system for mobile communications (global system for mobile communications, GSM) or code division multiple access (code division multiple access, CDMA), a NodeB (NodeB, NB) in wideband code division multiple access (wideband code division multiple access, WCDMA), an evolved NodeB (Evolved NodeB, eNB or eNodeB), a relay station, an access point, a vehicle-mounted device, or a wearable device in LTE, a next generation NodeB (next generation NodeB, gNB) in a 5G system, a base station in a future evolved PLMN network, or the like.

The following describes terms in embodiments of this application.

### 1. Sidelink (sidelink, SL) communication

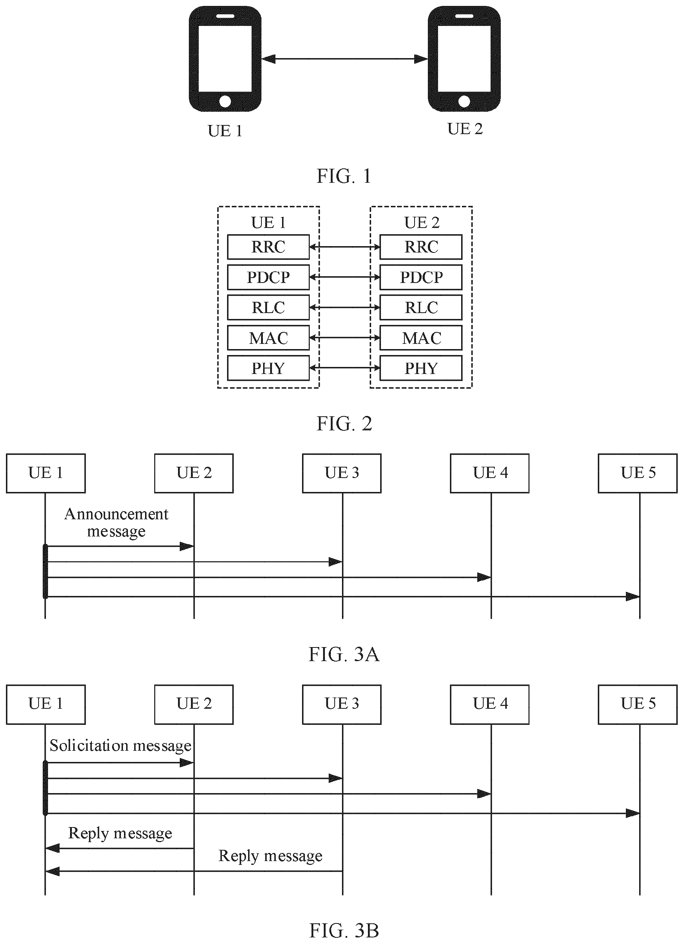

In a wireless communication system, data communication may be performed between terminal devices via a network device, or communication between terminal devices may be directly performed without using the network device. Communication in which data transmission is directly performed between the terminal devices without using the network device may be referred to as sidelink communication. For example, FIG. 1 is a diagram of an architecture of a communication system according to an embodiment of this application. In the sidelink communication, the communication system may include at least two terminal devices. In FIG. 1, two terminal devices are shown as an example, and are respectively a UE 1 and a UE 2. An interface between the UE 1 and the UE 2 is referred to as a PC5 interface, and a communication link between the UE 1 and the UE 2 is referred to as a sidelink. Data transmission may be directly performed between the UE 1 and the UE 2 through the sidelink without using a network, so that a communication delay can be effectively reduced. For example, an application scenario of a sidelink communication system may be vehicle-to-everything (vehicle-to-everything, V2X). In the V2X, each vehicle is a terminal device, and data may be directly transmitted between vehicles through a sidelink.

For example, FIG. 2 is a diagram of a control plane protocol architecture in sidelink communication according to an embodiment of this application. As shown in FIG. 2, peer protocol layers set up between a UE 1 and a UE 2 include a radio resource control (radio resource control, RRC) layer, a packet data convergence protocol (packet data convergence protocol, PDCP) layer, a radio link control (radio link control, RLC) layer, a media intervention control (media access control, MAC) layer, and a physical layer (physical layer, PHY) layer. On a control plane, the UE 1 encapsulates, in a PDCP protocol data unit (protocol data unit, PDU), an RRC message generated at the RRC layer, and sends the RRC message to the UE 2 after the RRC message is sequentially processed at the RLC layer, the MAC layer, and the PHY layer. The UE 2 obtains the PDCP PDU after the RRC message is sequentially processed at the PHY layer, the MAC layer, and the RLC layer.

For example, in the sidelink communication, several communication manners including broadcast, unicast, and multicast may be supported.

Broadcast communication may be similar to broadcasting system information by a network device. In other words, a sending terminal sends broadcast service data to the outside without encryption, and other terminal devices that are in an effective reception range of the sending terminal and that are interested in a broadcast service may receive the broadcast service data.

In unicast communication, a unicast connection needs to be first set up between two terminal devices. This is similar to data communication performed after an RRC connection is set up between a terminal device and a network device. After the unicast connection is set up, the two terminal devices may perform data communication based on a negotiated identifier, and data may be encrypted or may not be encrypted. In comparison with the broadcast communication, in the unicast communication, unicast communication can be performed only between two UEs between which a unicast connection is set up.

Multicast communication is communication between all terminal devices in one communication group. In the multicast communication, any terminal device in the communication group may receive or send multicast service data. For example, one terminal device in the communication group sends one piece of multicast service data, and all other terminal devices in the communication group may receive the multicast service data. The terminal device may also receive multicast service data sent by the other terminal devices in the communication group.

It should be understood that the communication manners supported by the sidelink are merely examples. Communication manners supported by the sidelink in embodiments of this application are not limited to the foregoing three examples, and may further include another new communication manner that appears as technologies develop. Therefore, the three communication manners shown above should not be understood as a limitation on an implementation of this application.

In the sidelink communication, one time of sidelink communication corresponds to a pair of a source layer-2 identifier (source layer-2 identifier, L2 ID) and a destination L2 ID. In other words, one time of sidelink communication performed needs one source L2 ID and one destination L2 ID. The source L2 ID and the destination L2 ID may be included in a subheader of a MAC data protocol unit (protocol data unit, PDU), so that data can be transmitted from a sending terminal to a correct receiving terminal.

For example, the source L2 ID is allocated by the sending terminal (also referred to as a source terminal). For example, the sending terminal may select different source L2 IDs based on a communication type and a standard. The communication type may include unicast communication, broadcast communication, and multicast communication, and the standard may include long term evolution (long term evolution, LTE) or new radio (new radio, NR). In some implementations, the sending terminal may periodically update the source L2 ID, to protect privacy of a sidelink service type (service type), so that the service type is not tracked and identified by another terminal device.

For example, the destination L2 ID may depend on the service type. The sending terminal may determine a correspondence between the destination L2 ID and a broadcast service, a multicast service, or a unicast service based on a manner such as a pre-configuration, an application layer server configuration, or a core network configuration. For example, in a broadcast communication or multicast communication process, the sending terminal may determine a destination L2 ID based on a broadcast service type or a multicast service type. In the unicast communication, the sending terminal first sets up a unicast connection to the receiving terminal (also referred to as a target terminal). For example, in a unicast connection setup process, the sending terminal may select a default destination L2 ID. The default destination L2 ID is related to a service type of the unicast communication. After setup of the unicast connection is completed, the sending terminal may continue to apply the default destination L2 ID for the unicast communication.

For example, a terminal device supporting a proximity-based service (proximity-based service, ProSe) may discover, through a discovery process, a neighboring connectable terminal device, and set up a unicast connection to the terminal device, so that communication is subsequently performed based on the unicast connection.

### (1) Discovery process

For example, the discovery process may include two discovery models: a first discovery model (a model A) and a second discovery model (a model B). For example, in the first discovery model, a terminal device may include an announcing terminal (an announcing UE) and a monitoring terminal (a monitoring UE). The announcing terminal broadcasts a discovery message. The discovery message may carry a source L2 ID and a destination L2 ID. For example, the source L2 ID may be allocated by the announcing terminal, and the destination L2 ID may be a pre-defined or pre-configured destination L2 ID. The discovery message may also be referred to as an announcement message (announcement message), and the announcement message may carry information about the announcing terminal. FIG. 3A is an example of a first discovery model according to an embodiment of this application. The first discovery model may include a plurality of terminal devices. FIG. 3A shows five terminal devices: a UE 1, a UE 2, a UE 3, a UE 4, and a UE 5. The UE 1 is an announcing terminal, and the UE 2, the UE 3, the UE 4, and the UE 5 are monitoring terminals. The UE 1 broadcasts an announcement message. The UE 2, the UE 3, the UE 4, and the UE 5 monitor the announcement message, and after receiving the announcement message, determine, based on information carried in the announcement message, whether to set up a unicast connection to the UE 1.

For example, in the second discovery model, terminal devices may include a discoverer terminal (a discoverer UE) and a discoveree terminal (a discoveree UE). The discoverer terminal may broadcast a discovery message. The discovery message may carry a source L2 ID and a destination L2 ID. For example, the source L2 ID may be allocated by the discoverer terminal, and the destination L2 ID may be a pre-defined or pre-configured destination L2 ID. The discovery message may also be referred to as a solicitation message (solicitation message). FIG. 3B is an example of a second discovery model according to an embodiment of this application. The second discovery model may include a plurality of terminal devices. FIG. 3B shows five terminal devices: a UE 1, a UE 2, a UE 3, a UE 4, and a UE 5. The UE 1 is a discoverer terminal, and the UE 2, the UE 3, the UE 4, and the UE 5 are discoveree terminals. The UE 1 broadcasts a solicitation message. The solicitation message may include a service requirement of the UE 1. The UE 2, the UE 3, the UE 4, and the UE 5 monitor the solicitation message, and after receiving the solicitation message, determine, based on information carried in the solicitation message, whether the service requirement of the UE 1 is satisfied. For example, if the UE 2 and the UE 3 determine that the service requirement of the UE 1 is satisfied, the UE 2 and the UE 3 send reply messages to the UE 1. After receiving the reply messages sent by the UE 2 and the UE 3, the UE 1 may select one of the UE 2 and the UE 3 to set up a unicast connection.

It should be understood that the two discovery models in the foregoing discovery process are merely examples. Discovery models in the discovery process in embodiments of this application are not limited to the foregoing two examples, and may alternatively include another new discovery model that appears as technologies develop. Therefore, the two discovery models shown above should not be understood as a limitation on an implementation of this application.

### (2) Unicast connection setup

For example, in a unicast connection setup process, a terminal device initiating the unicast connection setup procedure may be referred to as an initiating terminal (an initiating UE), for example, the monitoring terminal in the first discovery model and the discoverer terminal in the second discovery model. A peer end of the initiating terminal may be referred to as a target terminal (a target UE), for example, the announcing terminal in the first discovery model and the discoveree terminal in the second discovery model. For example, after a discovery process, the initiating terminal may determine a target terminal to which a unicast connection can be set up, and initiate the unicast connection setup procedure.

For example, after the discovery process, the initiating terminal may determine a source L2 ID for the unicast connection and a destination L2 ID of the target terminal. For example, the destination L2 ID may be obtained based on the discovery process. After determining the source L2 ID and the destination L2 ID, the initiating terminal sends a unicast connection setup request (direct communication request, DCR) message to the target terminal. The DCR message may carry the source L2 ID, the destination L2 ID, and user information (User Info). After receiving the DCR message, the target terminal stores the source L2 ID and the destination L2 ID, and associates the source L2 ID and the destination L2 ID with a current unicast connection context. For example, the target terminal may determine, based on the user information included in the DCR message, whether to accept a unicast connection setup request of the initiating terminal. If the target terminal determines to accept the unicast connection setup request, the target terminal sends a unicast connection accept (direct communication accept, DCA) message to the initiating terminal. If the target terminal determines not to accept the unicast connection setup request, the target terminal sends a unicast connection reject (direct communication reject) message to the initiating terminal.

### 2. User-to-network relay (UE-to-Network Relay, U2N Relay) technology

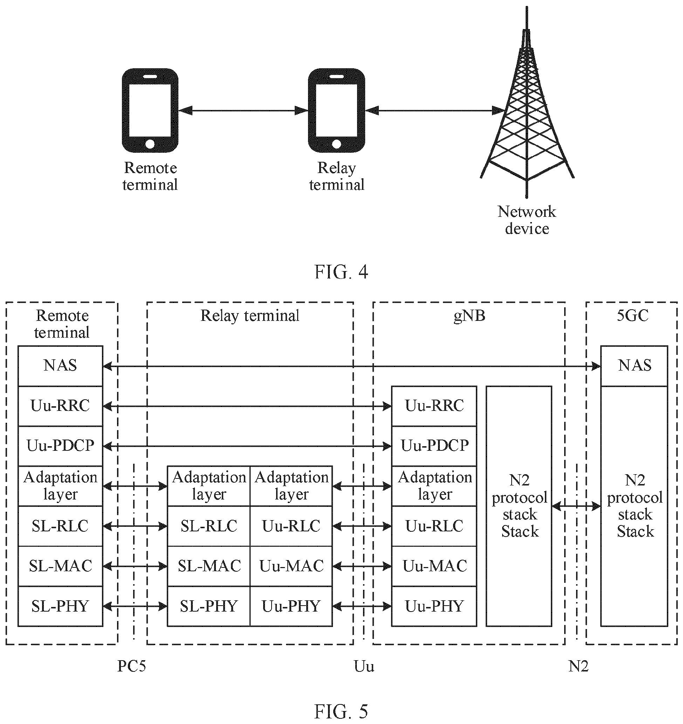

The U2N relay technology is a technology in which a terminal device helps another terminal device communicate with a network device. In other words, the U2N relay technology is a technology in which a terminal device communicates with a network device via another terminal device. The U2N relay technology may also be referred to as a relay technology. In a U2N relay communication architecture, a terminal device may include a remote device (a remote UE) and a relay device (a relay UE). The remote device may communicate with a network device via the relay device. FIG. 4 is an example of a U2N relay communication architecture according to an embodiment of this application. FIG. 4 shows one remote device, one relay device, and a network device. The remote device communicates with the network device via the relay device. The remote device communicates with the relay device through a unicast connection link, and a corresponding interface is referred to as PC5. The relay device is directly connected to the network device, that is, communicates through a Uu interface.

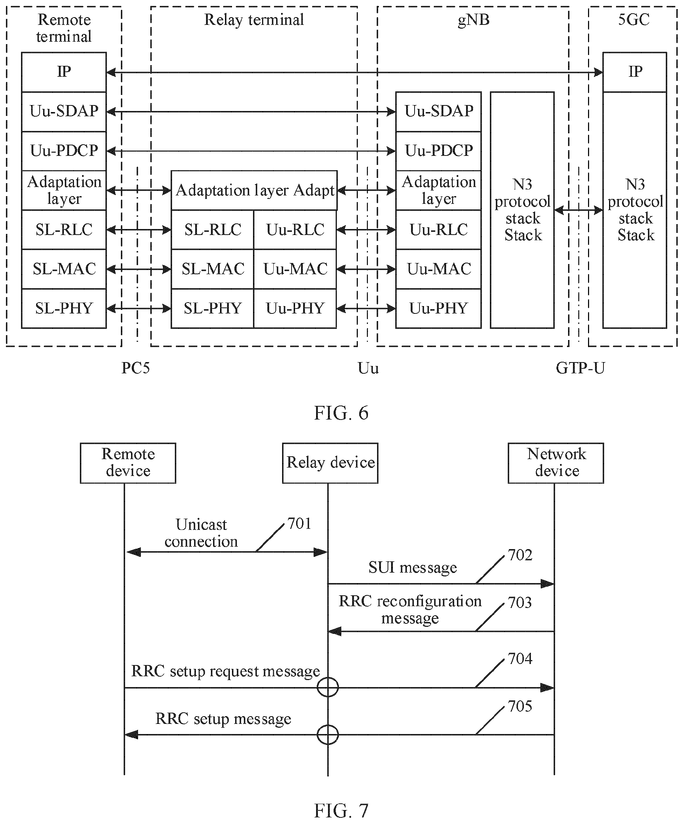

For example, FIG. 5 is a diagram of a control plane protocol architecture in a U2N relay communication architecture, and FIG. 6 is a diagram of a user plane protocol architecture in a U2N relay communication architecture.

For example, the control plane protocol stack architecture shown in FIG. 5 and the user plane protocol stack architecture shown in FIG. 6 are applicable to an L2 U2N relay scenario. For a control plane, as shown in FIG. 5, a PC5 unicast connection link is set up between a remote device and a relay device, and end-to-end protocol layers include an adaptation layer (Adaptation layer, Adapt), an RLC layer, a MAC layer, and a PHY layer. There is a Uu interface between the relay device and a network device (namely, a gNB), and end-to-end protocol layers include an adaptation layer, an RLC layer, a MAC layer, and a PHY layer. An N2 interface is set up between the network device and a core network, and end-to-end protocol layers include an N2 interface protocol stack (N2 Stack). In addition, end-to-end protocol layers between the remote device and the network device include an RRC layer and a PDCP layer. An end-to-end protocol layer between the remote device and the core network (5G Core Network, 5GC) includes a non-access stratum (non-access stratum, NAS) layer.

For a user plane, a PC5 unicast connection link is set up between a remote device and a relay device, and end-to-end protocol layers include an adaptation layer, an RLC layer, a MAC layer, and a PHY layer. There is a Uu interface between the relay device and a network device, and end-to-end protocol layers include an adaptation layer, an RLC layer, a MAC layer, and a PHY layer. A general packet radio service (general packet radio service, GPRS) tunnelling protocol user plane (GPRS tunnelling protocol user plane, GTP-U) interface is set up between the network device and a core network, and an end-to-end protocol layer includes an N3 stack. In addition, end-to-end protocol layers set up between the remote device and the network device include a service data adaptation protocol (service data adaptation protocol, SDAP) layer and a PDCP layer. An end-to-end protocol layer between the remote device and the core network includes an internet protocol (internet protocol, IP) protocol layer.

For example, a data packet of the remote device is relayed and forwarded below the PDCP layer of the relay device, that is, the relay device maintains a relay RLC bearer, and the relay device includes the RLC layer, the MAC layer, and the PHY layer. In addition, in the U2N relay communication architecture, an adaptation layer (Adaptation layer) is added between the RLC layer and the PDCP layer in the control plane protocol architecture and the user plane protocol architecture. A main function of the adaptation layer is multiplexing and splitting of radio bearers. To be specific, the adaptation layer supports multiplexing data from different PDCP entities onto one RLC bearer, or splitting data on one RLC bearer onto different radio bearers. For example, the adaptation layer is further configured to distinguish between data of different remote devices. For example, an adaptation layer in protocol stacks at two ends of a PC5 interface (that is, a sidelink) may be referred to as a PC5 adaptation layer, and an adaptation layer in protocol stacks at two ends of a Uu interface is referred to as a Uu adaptation layer.

For example, before the relay device sets up the unicast connection to the remote device, the remote device and the relay device may send the peer end through the discovery process, to obtain an L2 ID of the peer end. For example, in the first discovery model, the relay device may be an announcing terminal, and broadcast an announcement message, where the announcement message may carry an L2 ID of the relay device. For example, the announcement message may be a PC5 signal (PC5 signal, PC5-S). The remote device may be a monitoring terminal, and monitor and receive the announcement message sent by the relay device. After receiving the announcement message, the remote device may determine existence of the relay device based on the announcement message.

For example, in the second discovery model, the remote device may be a discoverer terminal, and the remote device broadcasts a solicitation message to search for a surrounding relay device. The relay device may be a discoveree terminal. After receiving the solicitation message, the relay device sends a reply message when determining that a condition is satisfied, so that the remote device determines existence of the relay device. For example, the solicitation message and the reply message are both PC5-S messages.

In embodiments of this application, the announcement message, the solicitation message, and the reply message in the discovery process may all be referred to as discovery messages. In other words, the discovery message in this application may be any one of the announcement message, the solicitation message, and the reply message.

For example, in a U2N relay communication system, to distinguish between data belonging to different remote devices, the network device may allocate an identifier (identifier, ID) to each remote device, to indicate the remote devices to which the data belongs. For example, after the remote device sets up the unicast connection to the relay device, the relay device sends an RRC message to the network device. The RRC message is for requesting the network device for an ID of the remote device. For example, the RRC message may include a sidelink user terminal information (SidelinkUEInformation, SUI) message. The identifier may be referred to as a local identifier (local ID), is applied to the adaptation layer, and is for enabling the relay device to distinguish between data of different remote devices and forward the data for the remote devices.

FIG. 7 is a diagram of interaction of setting up a connection by a remote device according to an embodiment of this application. As shown in FIG. 7, the remote device sets up the connection through the following steps.

701: The remote device sets up a unicast connection to a relay device. For example, the remote device may discover surrounding relay devices through a discovery process, and select a relay device from the surrounding relay devices to provide a relay service for the remote device. After selecting the relay device, the remote device sets up a PC5 link with the relay device. For example, the relay device can provide the relay service for the remote device only when signal quality of a Uu link between the relay device and a network device is greater than a threshold.

702: The relay device sends an SUI message to the network device, and correspondingly, the network device receives the SUI message. The relay device reports an L2 ID of the remote device to the network device by using the SUI message, to request the network device to allocate a local identifier to the remote device.

703: The network device sends an RRC reconfiguration message to the relay device, and correspondingly, the relay device receives the RRC reconfiguration message. For example, the network device sends, to the relay device by using the RRC reconfiguration message, the local identifier allocated to the remote device.

704: The remote device sends an RRC setup request (RRCSetupRequest) message to the network device via the relay device. For example, after receiving the RRCSetupRequest message, the relay device adds the local identifier to an adaptation layer, and then forwards the RRCSetupRequest message to the network device.

705: The network device sends an RRC setup (RRCSetup) message to the remote device via the relay device. For example, an adaptation layer of the RRCSetup message carries the local identifier of the remote device.

It may be understood that, after the remote device sets up the connection, in a downlink data transmission process, the network device may include the local identifier of the remote device in an adaptation layer of a data packet, and the relay device routes the data packet to the corresponding remote device based on the local identifier in the adaptation layer of the data packet.

In a U2N relay communication scenario, a scenario in which the remote device is connected to the network device via one relay device may be referred to as a single-hop communication scenario, and a scenario in which the remote device needs to be connected to the network device via a plurality of relay devices may be referred to as a multi-hop communication scenario. In a U2N relay single-hop scenario, a process in which the remote device sets up the connection is shown in FIG. 7.

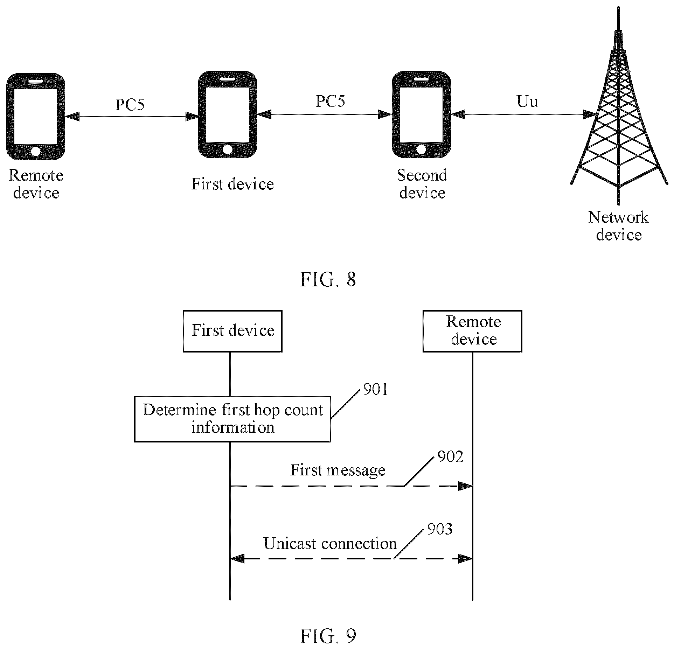

FIG. 8 is an example of a U2N relay multi-hop communication system according to an embodiment of this application. In the U2N relay multi-hop communication system, a remote device is connected to a network device via a plurality of relay devices. In FIG. 8, two relay devices are used as an example, and the two relay devices are respectively a first device and a second device. The second device is directly connected to the network device, the first device is connected to the network device via the second device, and the remote device is connected to the network device via the first device and the second device. The remote device communicates with the first device through a PC5 link, the first device communicates with the second device through a PC5 link, and the first device is directly connected to the network device and communicates with the network device through a Uu interface. Uplink and downlink data exchanged between the remote device and the network device is forwarded by the first device and the second device. For example, the second device is located in cell coverage. The first device and the remote device may be located in the cell coverage, or may be located outside the cell coverage.

It should be noted that the U2N relay multi-hop communication system shown in FIG. 8 is merely an example, and constitutes no limitation on an application scenario to which embodiments of this application are applicable. It should be understood that, in this embodiment of this application, that the remote device is connected to the network device via the first device and the second device is merely for description, and does not indicate that the remote device is connected to the network device via only the first device and the second device in the solution of this embodiment of this application.

A communication method provided in embodiments of this application may be applied to a U2N relay multi-hop communication scenario, to provide a better relay service for a remote device. The method provided in embodiments of this application may be applied to the U2N relay multi-hop communication system shown in FIG. 8. Alternatively, the method may be applied to a first device, a remote device, a network device, and a second device. The first device, the remote device, and the second device may be the terminal devices described above. The network device may be the network device described above. For descriptions of the first device, the remote device, the network device, and the second device, refer to the foregoing descriptions. Details are not described herein again.

FIG. 9 is a diagram of interaction of a communication method according to an embodiment of this application. As shown in FIG. 9, the communication method includes but is not limited to the following steps.

901: A first device determines first hop count information.

The first hop count information indicates a quantity of relay devices of the first device, and the first device is connected to a network device via the relay device. For example, the relay device provides a relay service for the first device, to be specific, the relay device forwards data for the first device. Therefore, the first hop count information may also indicate a quantity of relay devices through which data of the first device is sent to the network device.

For example, the first device may be connected to the network device via one or more relay devices. For example, the first device is connected to the network device via the second device, and the data of the first device needs to be forwarded to the network device via the second device. **In** other words, if the quantity of relay devices of the first device is **1,** the first hop count information may be 1. For another example, the first device is connected to the network device via two relay devices, and the data of the first device needs to be forwarded to the network device via the two relay devices. In other words, if the quantity of relay devices of the first device is 2, the first hop count information may be 2.

It may be understood that, when the first device is directly connected to the network device, the first hop count information is 0.

Optionally, the first hop count information may indicate the quantity of relay devices of the first device plus 1, that is, indicates a quantity of relay devices of a remote device. The first device provides a relay service for the remote device, and there is a unicast connection between the remote device and the first device.

In this embodiment of this application, the first device may determine, based on the first hop count information, whether to send a first message. The first message indicates the first device to provide the relay service. For example, the first device determines, based on the first hop count information, whether the first device can provide the relay service, to determine whether to send the first message. For example, when determining that the first device can provide the relay service, the first device sends the first message. When determining that the first device cannot provide the relay service, the first device determines not to send the first message. When the quantity of relay devices of the first device is large, a transmission delay of data sent by the first device to the network device is large. As a result, the first device is not suitable to serve as the relay device to forward data for the remote device. Therefore, the first device may determine, based on the first hop count information, whether the first device can provide the relay service, to avoid an excessively large transmission delay of transmitting data of the remote device to the network device when the first device forwards the data for the remote device, and ensure a small transmission delay of transmitting the data of the remote device to the network device when the first device forwards the data for the remote device, so that the first device can provide a better relay service for the remote device.

In a possible implementation, the first device determines, based on the first hop count information and a first threshold, whether to send the first message.

For example, the first threshold may be a hop count threshold of the first device, that is, a maximum hop count of the first device. When the first device reaches the hop count threshold, the first device does not provide the relay service, that is, the first device does not serve as the relay device to forward data for the remote device. Optionally, the hop count threshold may be configured by the network device or pre-defined in a protocol. This is not limited in this application.

For example, the first device may determine, based on a result of comparing the first hop count information with the first threshold, whether the first device reaches the hop count threshold, to determine whether the first device can provide the relay service. For example, when the first hop count information is less than the first threshold, the first device determines to provide the relay service, and determines to send the first message. When the first hop count information is greater than or equal to the first threshold, the first device determines not to provide the relay service, and determines not to send the first message. In this embodiment of this application, whether the first device provides the relay service is determined based on the first hop count information and the first threshold, and the transmission delay of transmitting the data of the remote device to the network device when the first device provides the relay service for the remote device can be effectively controlled by controlling the first threshold, so that the first device can provide a better relay service for the remote device.

In a possible implementation, the first device determines, based on the result of comparing the first hop count information with the first threshold and a result of comparing first signal quality with a second threshold, whether to send the first message. The first signal quality is signal quality of a communication link between the first device and the second device, and the second device is a relay device of the first device.

For example, the communication link between the first device and the second device is a PC5 link, and the first signal quality may include reference signal received power (reference signal received power, RSRP) of the PC5 link. Optionally, the first device may measure signal quality of the PC5 link based on a discovery message (for example, an announcement message) sent by the second device; or the first device may measure signal quality of the PC5 link based on data sent by the second device. For example, the first signal quality may include SD-RSRP or SL-RSRP. The SD-RSRP is signal quality that is of the PC5 link and that is obtained by the first device by measuring RSRP of the discovery message sent by the second device. The SL-RSRP is signal quality that is of the PC5 link and that is obtained by the first device by receiving and measuring the data sent by the second device.

For example, the second threshold may be pre-defined in a protocol or configured by the network device. A condition for the first device to provide the relay service includes: The first signal quality is greater than the second threshold. In other words, the first device can provide the relay service only when the first signal quality is greater than the second threshold.

Optionally, a condition that the first device needs to satisfy to provide the relay service includes: The first hop count information is greater than the first threshold, and the first signal quality is greater than the second threshold. In other words, when the first hop count information is greater than the first threshold and the first signal quality is greater than the second threshold, the first device determines that the first device can provide the relay service, and the first device determines to send the first message. When the first hop count information is less than or equal to the first threshold or the first signal quality is less than or equal to the second threshold, the first device determines that the first device can provide the relay service, and the first device determines not to send the first message.

In this embodiment of this application, the first device may determine, based on the signal quality of the PC5 link between the first device and the second device and the first hop count information, whether to provide the relay service, to avoid a case in which the data of the remote device cannot be transmitted to the network device because the signal quality of the communication link between the first device and the second device is poor when the first device provides the relay service for the remote device, and ensure service quality when the first device provides the relay service for the remote device.

In a possible implementation, the communication method shown in FIG. 9 may include step 902 and step 903.

902: The first device sends the first message, and correspondingly, the remote device receives the first message.

When determining to provide the relay service, the first device sends the first message, where the first message includes the first hop count. For example, when determining to provide the relay service, the first device may broadcast the first message.

For example, the first message may be a discovery message sent by the first device. For example, the first message may be the announcement message in the first discovery model or the reply message in the second discovery model.

In a possible implementation, the first message includes the first hop count information. The first device includes the first hop count information in the sent first message, to notify the remote device of the quantity of relay devices of the first device, so that the remote device can determine, based on the first hop count information, whether to select the first device as the relay device. Therefore, the remote device can select an appropriate relay device to connect to the network device.

903: The remote device determines, based on the first hop count information, to set up a unicast connection to the first device.

For example, the remote device determines, based on the first hop count information, whether to select the first device as the relay device of the remote device, to determine whether to set up the unicast connection to the first device. For example, the remote device may send a unicast connection setup request to the first device based on the first hop count information. For example, when determining, based on the first hop count information, to select the first device as the relay device, the remote device may send the unicast connection setup request to the first device. After receiving the unicast connection setup request, the first device may send a unicast connection accept message to the remote device.

For example, the remote device determines, by determining whether the first hop count information satisfies a hop count requirement of the remote device, whether to set up the unicast connection to the first device. For example, the remote device may determine whether the first hop count information is greater than a maximum hop count accepted by the remote device. When the first hop count information is less than the maximum hop count accepted by the remote device, the remote device determines to set up the unicast connection to the first device. When the first hop count information is greater than or equal to the maximum hop count accepted by the remote device, the remote device determines not to set up the unicast connection to the first device.

For example, the remote device may receive a plurality of discovery messages sent by a plurality of devices. Each of the plurality of discovery messages includes hop count information of the device corresponding to the discovery message, and the first device is a device with smaller hop count information in the plurality of devices.

For example, the remote device further receives a discovery message sent by a fourth device. The discovery message indicates the fourth device to provide a relay service, and the discovery message includes fourth hop count information. The remote device compares the first hop count information with the fourth hop count information. When the first hop count information is less than the fourth hop count information, the first device determines to set up the unicast connection to the first device. When the first hop count information is greater than the fourth hop count information, the first device determines to set up a unicast connection to the fourth device.

In some implementations, step 903 may be replaced with: The remote device initiates a unicast connection based on the first hop count information. For example, the remote device sends a unicast connection setup request to the first device based on the first hop count information. For example, when determining, based on the first hop count information, to select the first device as the relay device, the remote device may send the unicast connection setup request to the first device. For example, when the first hop count information is greater than the maximum hop count accepted by the remote device, the remote device sends the unicast connection setup request to the first device.

It may be understood that, when the remote device determines, based on the first hop count information, not to select the first device as the relay device, the remote device does not send the unicast connection setup request.

After determining to set up the unicast connection to the first device, the remote device sets up a PC5 link to the first device. The remote device may send data based on the PC5 link. Correspondingly, the first device receives, based on the PC5 link, the data sent by the remote device, and forwards the data for the remote device.

In this embodiment of this application, the first device may determine, based on the first hop count information, whether to provide the relay service. When the first device provides the relay service, the first device sends the first message. The first message may include the first hop count information. Therefore, the remote device may determine, based on the first hop count information, whether to select the first device as the relay device, to avoid an excessively large transmission delay of transmitting the data of the remote device to the network device when the remote device selects the first device as the relay device, so that the remote device can select a better path to connect to the network device, and the remote device can have a better relay service.

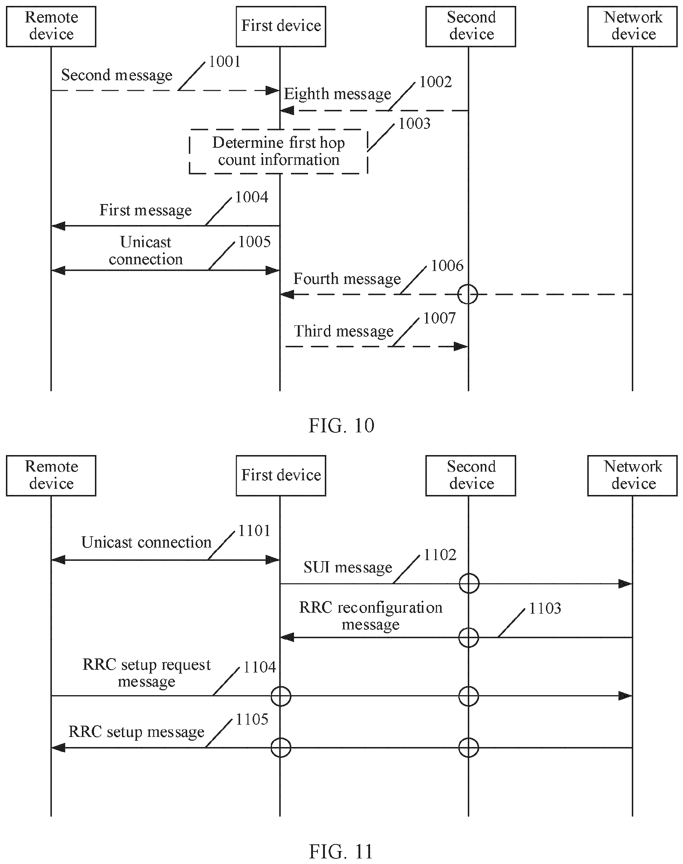

FIG. 10 is a diagram of interaction of another communication method according to an embodiment of this application. As shown in FIG. 10, the communication method includes but is not limited to the following steps.

In a possible implementation, the method shown in FIG. 10 includes step 1001 to step 1003.

1001: A remote device sends a second message, and correspondingly, a first device receives the second message, where the second message is for requesting a relay service, and the second message includes a first threshold.

For example, the first threshold may indicate a maximum hop count that can be accepted by the remote device. The second message may be a discovery message sent by the first device. For example, the second message is the solicitation message in the second discovery model. When the remote device needs the relay service, the remote device sends the second message, and includes the first threshold in the second message, to indicate the maximum hop count that can be accepted by the remote device.

For example, the first threshold may be pre-defined in a protocol or configured by a network device.

In a possible implementation, the first threshold is determined based on a requirement on a delay of transmitting data of the remote device to the network device.

For example, a lower requirement on the delay of transmitting the data of the remote device to the network device indicates a smaller first threshold, and a higher requirement on the delay of transmitting the data of the remote device to the network device indicates a larger first threshold. To be specific, a shorter delay that can be accepted when the data of the remote device is transmitted to the network device indicates a smaller maximum hop count that can be accepted by the remote device, and a longer delay that can be accepted when the data of the remote device is transmitted to the network device indicates a larger maximum hop count that can be accepted by the remote device.

In this embodiment of this application, when requesting the relay service by using the second message, the remote device includes the first threshold in the second message, so that the first device can determine, based on the first threshold, whether the first device can provide the relay service for the remote device.

1002: A second device sends an eighth message, and correspondingly, the first device receives the eighth message, where the eighth message includes second hop count information.

For example, the second hop count information indicates a quantity of relay devices of the second device, and the second device is a relay device of the first device, to be specific, the first device is connected to the network device via the second device. When the second device is directly connected to the network device, the second hop count information is 0.

For example, the eighth message may be a discovery message sent by the second device. For example, the eighth message may be the announcement message in the first discovery model or the reply message in the second discovery model. When determining that the second device can provide a relay service, the second device sends the eighth message, where the eighth message carries the second hop count information, so that a surrounding device (for example, the first device) can select the second device as the relay device based on the second hop count information.

Optionally, in some implementations, the second hop count information carried in the eighth message sent by the second device may be the quantity of relay devices of the second device plus 1.

It may be understood that the first device may receive the eighth message before setting up a unicast connection to the second device, or may receive the eighth message after setting up the unicast connection to the second device. This is not limited in this application.

1003: The first device determines first hop count information.

For example, the first device determines the first hop count information based on the second hop count information.

For example, when the first device is directly connected to the second device through a PC5 link, the first hop count information is the second hop count information plus 1. For example, if the second hop count information is 1, the first hop count information is 0.

It may be understood that step 1002 and step 1003 may be performed before step 1001, or may be performed after step 1001. This is not limited in this application. In other words, the first device may first receive the eighth message, or may first receive the second message. Alternatively, the first device may first receive the eighth message, and determine the first hop count information based on the second hop count information when receiving the second message.

1004: The first device sends a first message, and correspondingly, the remote device receives the first message, where the first message includes the first hop count information.

The first device sends the first message when determining that the first hop count information is less than the first threshold and first signal quality is greater than a second threshold. The first signal quality is signal quality of a communication link between the first device and the second device.

For example, after receiving the second message, the first device determines, based on the first hop count information and the first threshold, whether the first device can provide the relay service for the remote device, to determine whether to send the first message. When determining that the first device can provide the relay service for the remote device, the first device sends the first message. For example, the first message may be a discovery message sent by the first device, for example, the reply message in the second discovery model.

When the first signal quality is greater than the second threshold, it indicates that the first device can provide the relay service. When the first hop count information is less than the first threshold, it indicates that the first device satisfies a hop count requirement of the remote device. Therefore, when the first hop count information is less than the first threshold and the first signal quality is greater than the second threshold, the first device determines that the first device can provide the relay service for the remote device, and therefore sends the first message, to indicate that the first device can provide the relay service for the remote device.

For example, the first device may include the first hop count information in the first message, so that the remote device can select the first device as the relay device based on the first hop count information.

Optionally, in some possible implementations, the first hop count information carried in the first message may be a quantity of relay devices of the first device plus 1.

1005: The remote device sets up a unicast connection to the first device based on the first hop count information.

It may be understood that, for a specific implementation of step 1005, refer to the specific implementation of step 904 shown in FIG. 9. Details are not described herein again.

In a possible implementation, the method shown in FIG. 10 includes step 1006 and step 1007.

1006: The network device sends a fourth message to the first device, and correspondingly, the first device receives the fourth message, where the fourth message includes a first identifier of the remote device.

For example, the first identifier is a local identifier of the remote device. After allocating the local identifier to the remote device, the network device sends the local identifier to the first device by using the fourth message, so that the first device can determine the first identifier of the remote device based on the fourth message. Therefore, the first device can distinguish the data of the remote device based on the first identifier and forward the data for the remote device.

For example, the fourth message may be an RRC reconfiguration message. After the first device sets up the unicast connection to the remote device, the first device sends an SUI message to the network device, to request the local identifier of the remote device. After receiving the SUI message, the network device allocates the local identifier to the remote device, and sends the local identifier to the first device by using the RRC reconfiguration message.

It may be understood that the network device sends the RRC reconfiguration message to the first device via the second device.

Optionally, in some implementations, the first device is a relay device of a third device, and the third device is a relay device of the remote device. In this implementation, the first device is connected to the remote device via the third device, and the remote device sets up a unicast connection to the third device. There is no unicast connection between the first device and the remote device. After the remote device sets up the unicast connection to the third device, the network device allocates the local identifier to the remote device, and separately sends the local identifier to the first device and the third device by using RRC reconfiguration messages, so that the first device and the third device can quickly determine the local identifier of the remote device. Alternatively, the network device sends the local identifier to the third device by using an RRC reconfiguration message, and then the third device sends the local identifier to the first device.

Optionally, after allocating the local identifier to the remote device, the network device may send the local identifier to each relay device of the remote device by using an RRC reconfiguration message.

1007: The first device sends a third message to the second device, and correspondingly, the second device receives the third message, where the third message includes the first identifier.

For example, the first identifier is the local identifier of the remote device. After determining the first identifier, the first device may send the first identifier to the second device by using the third message, so that the second device can forward data for the remote device based on the first identifier. After receiving the third message, the second device determines that the first identifier is an unrecorded identifier, and records the first identifier and a correspondence between the first identifier and a route, so that the second device can route the data of the remote device to a correct path based on the correspondence between the first identifier and the route.

For example, the second device may associate the first identifier with the first device, and forward, when receiving a data packet that carries the first identifier at an adaptation layer, the data packet to the first device.

For example, the third message may be an RRC setup request message or a dedicated PC5-RRC message.

In a possible implementation, the third message is an RRC setup request message sent by the remote device. For example, after setting up the unicast connection to the first device, the remote device may send the RRC setup request message to the network device through the unicast connection. After receiving the RRC setup request message, the first device adds the local identifier of the remote device to an adaptation layer of the RRC setup request message, and forwards the RRC setup request message to the second device. After receiving the RRC setup request message, the second device obtains the local identifier of the remote device at the adaptation layer of the RRC setup request message. When determining that the local identifier is an identifier that is not locally recorded, the second device records a correspondence between the local identifier and a route, and forwards the RRC setup request message to the network device.

In another possible implementation, the third message is a PC5-RRC message. For example, the first device may determine the local identifier of the remote device based on the RRC reconfiguration message sent by the network device, and send the local identifier to the second device by using the PC5-RRC message. After receiving the PC5-RRC message, the second device records a correspondence between the local identifier and a route.

In this embodiment of this application, the first device adds the first hop count information to the first message, so that the remote device selects, based on the first hop count information, a better path to connect to the network device. In addition, after determining the first identifier of the remote device, the first device may send the first identifier to the second device by using the third message, so that the second device can determine the correspondence between the first identifier and the route based on the third message, and the second device can route the data of the remote device to the correct path based on the correspondence between the first identifier and the route.

FIG. 11 is a diagram of interaction of still another communication method according to an embodiment of this application. As shown in FIG. 11, the communication method includes but is not limited to the following steps.

1101: A first device sets up a unicast connection to a remote device.

For example, the remote device may discover the first device through a discovery process, and determine to set up the unicast connection to the first device. In the discovery process, the first device determines, based on first hop count information, to send a first message, to indicate the first device to pass a relay service. For specific descriptions of the first hop count information and the first message, refer to the foregoing descriptions. Details are not described herein again.

1102: The first device sends an SUI message to a network device, and correspondingly, the network device receives the SUI message.

For example, the SUI message includes an L2 ID of the remote device. After setting up the unicast connection to the remote device, the first device reports the L2 ID of the remote device to the network device by using the SUI message, to request the network device to allocate a local identifier to the remote device.

It may be understood that the first device may send the SUI message to the network device via a second device. To be specific, the first device transmits the SUI message to the second device through a PC5 link. After receiving the SUI message, the second device forwards the SUI message to the network device.

1103: The network device sends an RRC reconfiguration message to the first device, and correspondingly, the first device receives the RRC reconfiguration message, where the RRC reconfiguration message includes a first identifier of the remote device.

For example, the first identifier is the local identifier of the remote device. After allocating the local identifier to the remote device, the network device sends the local identifier to the first device by using the RRC reconfiguration message, so that the first device can distinguish data of the remote device and forward the data for the remote device.

It may be understood that the network device sends the RRC reconfiguration message to the first device via the second device.

1104: The remote device sends an RRC setup request message to the network device, and correspondingly, the network device receives the RRC setup request message.

The remote device sends the RRC setup request message to the network device via the first device and the second device. After receiving the RRC setup request message, the first device adds the local identifier of the remote device to an adaptation layer, and forwards the RRC setup request message to the second device.

For example, to forward data for the remote device, the second device needs to determine the local identifier of the remote device. The second device may determine the local identifier of the remote device based on the RRC setup request message sent by the first device, a PC5-RRC message sent by the first device, or the RRC reconfiguration message sent by the network device.

In a possible implementation, a first unicast connection and a second unicast connection exist between the first device and the second device. The first unicast connection is for transmitting data of the remote device, and the second unicast connection is for transmitting data of the first device.

For example, after setting up the unicast connection to the remote device, the first device sets up the first unicast connection to the second device. The first unicast connection is for transmitting the data of the remote device. For example, the first device may set up the first unicast connection to the second device before forwarding the RRC setup request message for the remote device, so that the RRC setup request message is forwarded to the second device through the first unicast connection. For example, after receiving a message, the second device may determine, based on a unicast connection through which the message is received, whether the message belongs to the first device or the remote device.

In this embodiment of this application, the first unicast connection for transmitting the remote device may be set up between the first device and the second device. In a subsequent process in which the first device forwards data for the remote device, the first device forwards the data of the remote device to the second device through the first unicast connection, so that the second device can determine, based on the unicast connection through which the data is received, whether the data belongs to the first device or the remote device.

In another possible implementation, bearers between the first device and the second device include a first bearer and a second bearer. The first bearer is for transmitting data of the remote device, and the second bearer is for transmitting data of the first device.

For example, the first bearer may be a PC5 RLC bearer. The network device may configure the first bearer for the first device and the second device by using an RRC reconfiguration message. The first bearer is for transmitting the data of the remote device. After receiving a data packet sent by the remote device, the first device may transmit the data packet to the second device through the first bearer. The second device may determine, based on the first bearer for transmitting the data packet, that the data packet belongs to the remote device.

For example, the network device may configure the first bearer before the first device forwards the RRC setup request message for the remote device.

For example, the first bearer is further for transmitting data of another device that uses the first device as a relay device. For example, if the first device further forwards data for a first remote device, when receiving data of the first remote device, the first device may forward the data of the first remote device to the second device through the first bearer.

In this embodiment of this application, the data of the first device and the data of the remote device are transmitted through different bearers, so that the second device can distinguish between the data of the first device and the data of the remote device based on a bearer for receiving data.

1105: The network device sends an RRC setup message to the remote device, and correspondingly, the remote device receives the RRC setup message.

For example, an adaptation layer of the RRC setup message carries the local identifier of the remote device. After receiving the RRC setup message, the second device forwards the RRC setup message to the first device based on the local identifier. Then, the first device forwards the RRC setup message to the remote device based on the local identifier. The remote device receives the RRC setup message, and completes an RRC connection to the network device.

In this embodiment of this application, after allocating the local identifier to the remote device, the network device may send the identifier to the first device by using the RRC reconfiguration message, and then the first device sends the local identifier to the second device by using the RRC setup request message, or the network device may directly send the local identifier to the second device by using the RRC reconfiguration message, so that both the first device and the second device can learn of the local identifier of the remote device, and can route the data of the remote device to a correct path based on the local identifier.

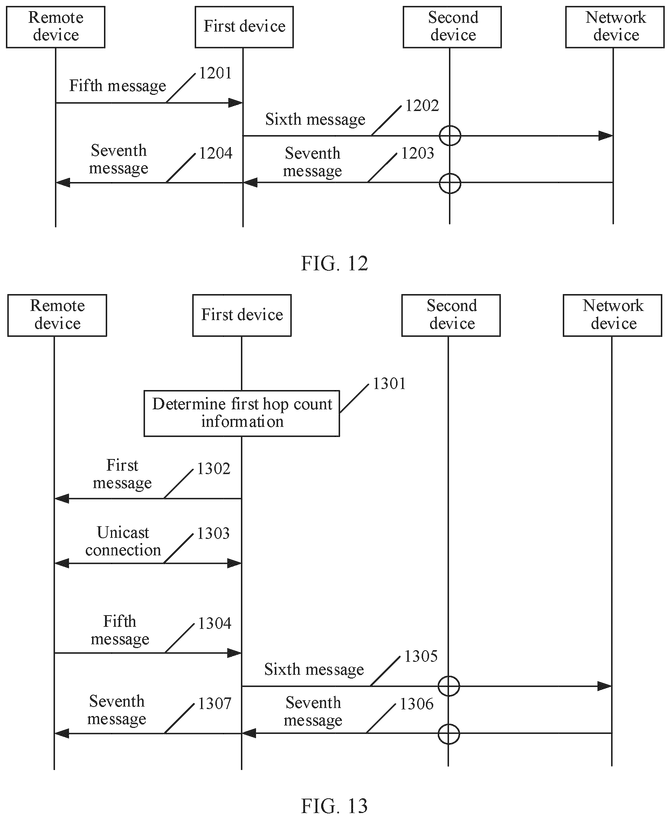

FIG. 12 is a diagram of interaction of still another communication method according to an embodiment of this application. As shown in FIG. 12, the communication method includes but is not limited to the following steps.

1201: A remote device sends a fifth message, and correspondingly, a first device receives the fifth message, where the fifth message includes a paging identifier of the remote device, and the paging identifier indicates the first device to monitor paging for the remote device.

For example, the paging identifier may include a 5G system-temporary mobile subscriber identity (5G system-temporary mobile subscriber identity, 5G-S-TMSI) or an inactive radio network temporary identifier (inactive radio network temporary identifier, I-RNTI). The remote device is in an RRC idle (RRC_IDLE) state or an RRC inactive (RRC_INACTIVE) state.

For example, the remote device may send the fifth message when the remote device needs the first device or a second device to help monitor paging, to report the paging identifier to the first device. After receiving the fifth message, the first device associates the paging identifier with a unicast connection corresponding to the remote device, and monitors a paging message for the remote device.

1202: The first device sends a sixth message to a network device, and correspondingly, the network device receives the sixth message, where the sixth message includes a first identifier and the paging identifier of the remote device.

For example, the first device reports the first identifier and the paging identifier of the remote device to the network device by using the sixth message, so that the network device can determine, based on the first identifier, a path for the remote device to connect to the network device and a relay device (for example, the first device and the second device) on the path.

It may be understood that the first device sends the sixth message to the network device via the second device.

For example, when the first device is in an RRC connected (RRC_CONNECTED) state, when the first device sends the sixth message to the network device, the second device needs to forward the sixth message. In this case, after receiving the sixth message, the second device may directly forward the sixth message without parsing the sixth message.

When the first device is in the RRC idle state or the inactive state, the first device may send the sixth message to the second device. The sixth message may further include a paging identifier of the first device. After receiving the sixth message, the second device parses the sixth message to obtain the paging identifier of the remote device, and associates the paging identifier with the first device. After parsing the sixth message, the second device generates a ninth message based on the first identifier and the paging identifier, and sends the ninth message to the network device.

For example, the ninth message may be an RRC message.

It may be understood that, when the second device is in the RRC connected state, the second device may send the ninth message to the network device. When the second device is in the RRC idle state or the RRC inactive state, the second device may send the ninth message to a relay device of the second device. If the second device is directly connected to the network device, the second device does not send the ninth message.

1203: The network device sends a seventh message, and correspondingly, the first device receives the seventh message, where the seventh message includes the first identifier and the paging identifier of the remote device, and the seventh message is for paging the remote device.

For example, the seventh message may be a paging message. For example, the network device may send the paging message to the first device by using an RRC dedicated message.

For example, an adaptation layer of the seventh message carries the first identifier. The network device may send the seventh message to the second device through a dedicated downlink channel. After determining that the seventh message includes the paging identifier of the remote device, the second device forwards the seventh message to the first device. After receiving the seventh message, the first device determines, based on the first identifier at the adaptation layer of the seventh message, to forward the seventh message to the remote device. It may be understood that, when the second device is in the RRC connected state, the network device may directly send the seventh message to the second device without broadcasting the paging message.

For example, the network device may determine, based on the first identifier, a relay device in the RRC idle state or the RRC inactive state on a path on which the remote device connects to the network device, and page the relay device in the RRC idle state or the RRC inactive state on the path, so that all relay devices on the path enter the RRC connected state.

In a possible implementation, the seventh message is further for paging a first relay device. The first relay device is a relay device of the remote device. To be specific, the remote device is connected to the network device via the first relay device. The first relay device is in the RRC idle state or the RRC inactive state. For example, the seventh message includes a paging identifier of the first relay device. After receiving the seventh message, the first relay device forwards the seventh message to the remote device, and enters the RRC connected state.

In this application, the seventh message may be for paging a relay device (for example, the first relay device) in the RRC idle state or the RRC inactive state in the relay devices of the remote device. For example, when the first device is in the RRC idle state or the RRC inactive state, after receiving the seventh message, the first device enters the RRC connected state.

In this embodiment of this application, the first relay device is in the RRC idle state or the RRC inactive state. When the remote device is in the RRC connected state, the relay device of the remote device also needs to be in the RRC connected state, to help forward data for the remote device. Therefore, the network device may page the first relay device by using the seventh message, so that the first relay device can quickly enter the RRC connected state.

1204: The first device forwards the seventh message, and correspondingly, the remote device receives the seventh message.

For example, the first device determines, based on the first identifier at the adaptation layer of the seventh message, to forward the seventh message to the remote device, to implement a process of helping the remote device monitor paging. After receiving the seventh message, the remote device enters the RRC connected state based on the seventh message.

In this embodiment of this application, when the remote device needs the first device to help monitor paging, the remote device may report the paging identifier of the remote device to the first device. Then, the first device reports the local identifier and the paging identifier of the remote device to the network device, so that when determining to page the remote device, the network device can directly send the paging message to the first device without broadcasting the paging message, to improve paging efficiency.

FIG. 13 is a diagram of interaction of still another communication method according to an embodiment of this application. As shown in FIG. 13, the communication method includes but is not limited to the following steps.

1301: A first device determines first hop count information, where the first hop count information indicates a quantity of relay devices of the first device, and the first device is connected to a network device via the relay device.

It may be understood that, for a specific implementation of step 1301, refer to the specific implementation of step 901 shown in FIG. 9 or step 1003 shown in FIG. 10. Details are not described herein again.

1302: The first device sends a first message, and correspondingly, a remote device receives the first message, where the first message includes the first hop count information, and the first message indicates the first device to provide a relay service.

It may be understood that, for a specific implementation of step 1302, refer to the specific implementation of step 902 shown in FIG. 9. Details are not described herein again.

1303: The remote device determines, based on the first hop count information, to set up a unicast connection to the first device.

It may be understood that, for a specific implementation of step 1303, refer to the specific implementation of step 903 shown in FIG. 9. Details are not described herein again.

1304: The remote device sends a fifth message, and correspondingly, the first device receives the fifth message, where the fifth message includes a paging identifier of the remote device, and the paging identifier indicates the first device to monitor paging for the remote device.

It may be understood that, for a specific implementation of step 1304, refer to the specific implementation of step 1201 shown in FIG. 12. Details are not described herein again.

1305: The first device sends a sixth message, and correspondingly, the network device receives the sixth message, where the sixth message includes a first identifier and the paging identifier of the remote device.

It may be understood that, for a specific implementation of step 1305, refer to the specific implementation of step 1202 shown in FIG. 12. Details are not described herein again.

1306: The network device sends a seventh message, and correspondingly, the first device receives the seventh message, where the seventh message includes the first identifier and the paging identifier of the remote device, and the seventh message is for paging the remote device.

It may be understood that, for a specific implementation of step 1306, refer to the specific implementation of step 1203 shown in FIG. 12. Details are not described herein again.

1307: The first device forwards the seventh message, and correspondingly, the remote device receives the seventh message.

It may be understood that, for a specific implementation of step 1307, refer to the specific implementation of step 1204 shown in FIG. 12. Details are not described herein again.

In this embodiment of this application, the first device may include the first hop count information in the first message, so that the remote device can determine, based on the first hop count information, to set up the unicast connection to the first device. When the remote device needs the first device to monitor paging for the remote device, the remote device reports the paging identifier of the remote device to the first device. Then, the first device reports the first identifier and the paging identifier of the remote device to the network device. When determining to page the remote device, the network device may directly send a paging message to the first device without broadcasting the paging message, to improve paging efficiency. After receiving the paging message, the first device may forward the paging message to the remote device, so that the first device monitors paging for the remote device.

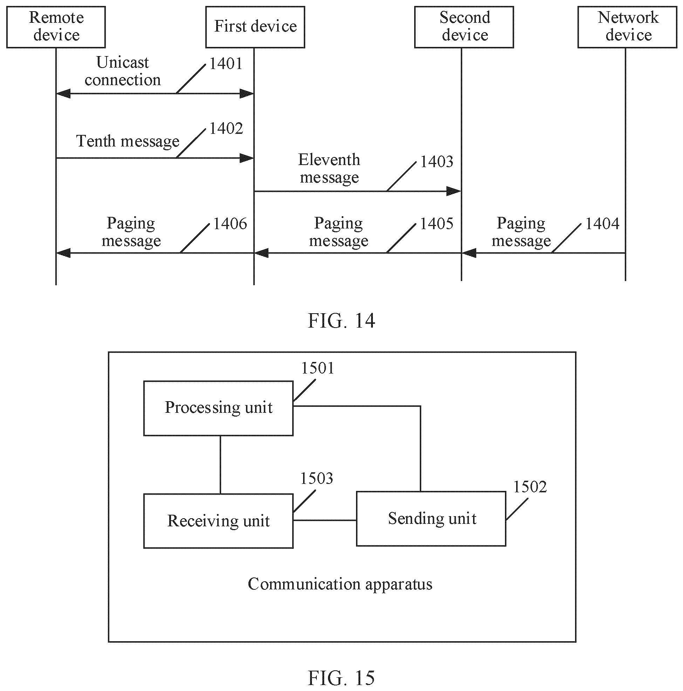

FIG. 14 is a diagram of interaction of still another communication method according to an embodiment of this application. As shown in FIG. 14, the communication method includes but is not limited to the following steps.

1401: A remote device sets up a unicast connection to a first device.

1402: The remote device sends a tenth message, and correspondingly, the first device receives the tenth message, where the tenth message includes a paging identifier of the remote device, indicating the first device to monitor paging for the remote device.

For example, after receiving the tenth message, the first device may associate the paging identifier with the unicast connection corresponding to the remote device.

1403: The first device sends an eleventh message, and correspondingly, a second device receives the eleventh message, where the eleventh message includes the paging identifier of the remote device.

For example, when the first device is in an RRC idle state or an RRC connected state, the first device may report the paging identifier of the remote device to the second device by using the eleventh message. After receiving the eleventh message, the second device may associate the paging identifier with a unicast connection corresponding to the first device.

For example, the first device may provide a relay service for a plurality of remote devices, and the plurality of remote devices may report paging identifiers of the plurality of remote devices to the first device. The first device may report, to the second device by using the eleventh message, the paging identifier of the remote device that needs help in monitoring paging.

1404: A network device broadcasts a paging message, and correspondingly, the second device receives the paging message, where the paging message includes the paging identifier of the remote device.

For example, when determining to page the remote device, the network device broadcasts the paging message, where the paging message carries the paging identifier of the remote device. After receiving the paging message, the second device obtains, through parsing, the identifier carried in the paging message. When determining that the paging message carries the paging identifier of the remote device, the second device determines to forward the paging message to the first device.

1405: The second device forwards the paging message, and correspondingly, the first device receives the paging identifier.

For example, when determining that the paging message includes the paging identifier of the remote device, the second device may forward the paging message to the first device through the unicast connection associated with the paging identifier.

1406: The first device forwards the paging message, and correspondingly, the remote device receives the paging message.

For example, after receiving the paging message, the first device determines that the paging message includes the paging identifier of the remote device, and forwards the paging message to the remote device through the unicast connection associated with the paging identifier. After receiving the paging message, the remote device enters an RRC connected state.

In some possible implementations, after receiving the paging message, the second device may generate a second paging message based on the paging message. The second paging message includes a paging identifier (for example, the paging identifier of the remote device) associated with the unicast connection corresponding to the first device. The second device sends the second paging message to the first device. It may be understood that the paging message may include a plurality of paging identifiers, and the second paging message includes the paging identifier that is in the plurality of paging identifiers and that is associated with the unicast connection corresponding to the first device. After receiving the second paging message, the first device may generate a third paging message based on the second paging message, where the third paging message includes the paging identifier of the remote device, and forward the third paging message through the unicast connection corresponding to the remote device. In this implementation, after receiving the paging message sent by the network device, the second device may generate the second paging message based on the paging message, and does not need to forward all the paging messages, so that signaling overheads can be reduced.

Optionally, the first device and the second device may further forward a system message broadcast (system information broadcast, SIB) message for the remote device. For example, the tenth message includes a SIB type requested by the remote device, and the tenth message may be a PC5-RRC message. For example, when the remote device is in the RRC idle state or the RRC inactive state, the remote device may report the requested SIB type to the first device by using the PC5-RRC message. Then, the first device reports the SIB type to the second device by using the eleventh message. After determining the SIB type requested by the remote device, the second device triggers a step of requesting an on-demand (on-demand) system message (system information, SI)/SIB. The second device sends the obtained SI(s)/SIB(s) to the first device, and then the first device sends the SI(s)/SIB(s) to the remote device by using a PC5-RRC message.

Optionally, when the remote device is in the RRC connected state, the remote device may trigger a procedure of requesting the on-demand SI/SIB, to obtain the SIB(s).

In this embodiment of this application, the remote device may report the paging identifier of the remote device or the requested SIB type to a relay device (for example, the first device and the second device) on a path on which the remote device connects to the network device. After receiving the corresponding paging message or SIB message, the relay device forwards the paging message or the SIB message to the corresponding remote device, so that the relay device on the path helps the remote device monitor the paging message or the SIB message.

A communication apparatus provided in an embodiment of this application is described below.

In this application, the communication apparatus is divided into functional modules based on the foregoing method embodiments. For example, each functional module may be divided to each corresponding function, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The communication apparatus in embodiments of this application is described below in detail with reference to FIG. 15 to FIG. 17.

FIG. 15 is a diagram of a structure of a communication apparatus according to an embodiment of this application. As shown in FIG. 15, the communication apparatus includes a processing unit 1501, a sending unit 1502, and a receiving unit 1503. The sending unit 1502 and the receiving unit 1503 may be combined into a transceiver unit, configured to implement a corresponding communication function. The transceiver unit may also be referred to as a communication interface, a communication unit, or the like.

In some embodiments of this application, the communication apparatus may be the first device shown above. To be specific, the communication apparatus shown in FIG. 15 may be configured to perform steps, functions, or the like performed by the first device in the foregoing method embodiments. For example, the first device may be a beamforming transmit device or a chip. This is not limited in this embodiment of this application.

The processing unit 1501 is configured to determine first hop count information, and determine, based on the first hop count information, whether to send a first message.

Optionally, the sending unit 1502 is configured to send the first message.

Optionally, the receiving unit 1503 is configured to receive a second message.

Optionally, the sending unit 1502 is further configured to send a third message.

Optionally, the receiving unit 1503 is further configured to receive a fourth message.

Optionally, the receiving unit 1503 is further configured to receive a fifth message, and the sending unit 1502 is further configured to send a sixth message.

Optionally, the receiving unit 1503 is further configured to receive a seventh message, and the sending unit 1502 is further configured to forward the seventh message.

Optionally, the receiving unit 1503 is further configured to receive an eighth message.

It may be understood that, for specific descriptions of the first hop count information, the first message, the second message, the third message, the fourth message, the fifth message, the sixth message, the seventh message, the eighth message, and the like, refer to the foregoing method embodiments, such as related descriptions of the methods shown in FIG. 9, FIG. 10, FIG. 11, FIG. 12, FIG. 13, and FIG. 14. Details are not described herein again.

It may be understood that specific descriptions of the processing unit, the sending unit, and the receiving unit shown in this embodiment of this application are merely examples. For specific functions or steps performed by the processing unit, the sending unit, and the receiving unit, refer to the foregoing method embodiments. Details are not described herein again. For example, the sending unit 1502 is further configured to perform sending steps in step 902 shown in FIG. 9, step 1004 and step 1007 shown in FIG. 10, step 1202 shown in FIG. 12, step 1302 and step 1305 shown in FIG. 13, and step 1403 shown in FIG. 14. The receiving unit 1503 is further configured to perform receiving steps in step 1001, step 1002, and step 1007 shown in FIG. 10, step 1103 shown in FIG. 11, step 1201 and step 1203 shown in FIG. 12, step 1304 and step 1306 shown in FIG. 13, and step 1402 and step 1405 shown in FIG. 14.

Still refer to FIG. 15. In some other embodiments of this application, the communication apparatus may be the remote device shown above. To be specific, the communication apparatus shown in FIG. 15 may be configured to perform steps, functions, or the like performed by the remote device in the foregoing method embodiments. For example, the communication apparatus may be a beamforming receive device or a chip. This is not limited in this embodiment of this application.

The receiving unit 1503 is configured to receive a first message.

The processing unit 1501 is configured to determine, based on first hop count information, to set up a unicast connection to a first device.

Optionally, the sending unit 1502 is configured to send a second message.

Optionally, the sending unit 1502 is further configured to send a fifth message.

Optionally, the receiving unit 1503 is further configured to receive a seventh message.

It may be understood that, for specific descriptions of the first hop count information, the first message, the second message, the fifth message, the seventh message, and the like, refer to the foregoing method embodiments, such as related descriptions of the methods shown in FIG. 9, FIG. 10, FIG. 11, FIG. 12, FIG. 13, and FIG. 14. Details are not described herein again.

It may be understood that specific descriptions of the receiving unit, the sending unit, and the processing unit shown in this embodiment of this application are merely examples. For specific functions or steps performed by the receiving unit, the sending unit, and the processing unit, refer to the foregoing method embodiments. Details are not described herein again. For example, the receiving unit 1503 may be further configured to perform receiving steps in step 902 shown in FIG. 9, step 1004 shown in FIG. 10, step 1105 shown in FIG. 11, step 1204 shown in FIG. 12, step 1302 and step 1307 shown in FIG. 13, and step 1406 shown in FIG. 14. The sending unit 1502 may be further configured to perform sending steps in step 1001 shown in FIG. 10, step 1104 shown in FIG. 11, step 1201 shown in FIG. 12, step 1304 shown in FIG. 13, and step 1402 shown in FIG. 14.

Still refer to FIG. 15. In some other embodiments of this application, the communication apparatus may be the network device shown above. To be specific, the communication apparatus shown in FIG. 15 may be configured to perform steps, functions, or the like performed by the network device in the foregoing method embodiments. For example, the communication apparatus may be a beamforming receive device or a chip. This is not limited in this embodiment of this application.

The receiving unit 1503 is configured to receive a sixth message.

The sending unit 1502 is configured to send a seventh message.

Optionally, the sending unit 1502 is further configured to send a fourth message.

It may be understood that, for specific descriptions of the sixth message, the seventh message, and the fourth message, refer to the foregoing method embodiments, such as related descriptions of the methods shown in FIG. 9, FIG. 10, FIG. 11, FIG. 12, FIG. 13, and FIG. 14. Details are not described herein again.

It may be understood that specific descriptions of the receiving unit, the sending unit, and the processing unit shown in this embodiment of this application are merely examples. For specific functions or steps performed by the receiving unit, the sending unit, and the processing unit, refer to the foregoing method embodiments. Details are not described herein again. For example, the sending unit 1502 may be further configured to perform sending steps in step 1006 shown in FIG. 10, step 1103 and step 1105 shown in FIG. 11, step 1203 shown in FIG. 12, step 1306 shown in FIG. 13, and step 1404 shown in FIG. 14. The receiving unit 1503 may be further configured to perform receiving steps in step 1102 and step 1104 shown in FIG. 11, step 1202 shown in FIG. 12, and step 1305 shown in FIG. 13.

Still refer to FIG. 15. In some other embodiments of this application, the communication apparatus may be the second device shown above. To be specific, the communication apparatus shown in FIG. 15 may be configured to perform steps, functions, or the like performed by the second device in the foregoing method embodiments. For example, the communication apparatus may be a beamforming receive device or a chip. This is not limited in this embodiment of this application.

The receiving unit 1503 is configured to receive a third message.

The processing unit 1501 is configured to record a first identifier.

Optionally, the sending unit 1502 is configured to send an eighth message.

It may be understood that, for specific descriptions of the third message, the first identifier, and the eighth message, refer to the foregoing method embodiments, such as related descriptions of the methods shown in FIG. 9, FIG. 10, FIG. 11, FIG. 12, FIG. 13, and FIG. 14. Details are not described herein again.

It may be understood that specific descriptions of the receiving unit, the sending unit, and the processing unit shown in this embodiment of this application are merely examples. For specific functions or steps performed by the receiving unit, the sending unit, and the processing unit, refer to the foregoing method embodiments. Details are not described herein again. For example, the sending unit may be further configured to perform a sending step in step 1002 shown in FIG. 10. The receiving unit 1503 may be further configured to perform receiving steps in step 1007 shown in FIG. 10 and step 1404 shown in FIG. 14.

For example, the receiving unit 1503 and the sending unit 1502 may be further configured to receive and forward a fourth message, an SUI message, an RRC reconfiguration message, an RRC setup request message, an RRC setup message, a sixth message, a seventh message, and a paging message. For specific descriptions of the fourth message, the SUI message, the RRC reconfiguration message, the RRC setup request message, the RRC setup message, the sixth message, the seventh message, and the paging message, refer to the foregoing method embodiments, such as related descriptions of the methods shown in FIG. 9, FIG. 10, FIG. 11, FIG. 12, FIG. 13, and FIG. 14. Details are not described herein again.

The foregoing describes the first device, the remote device, the network device, and the second device in embodiments of this application. The following describes possible product forms of the first device, the remote device, the network device, and the second device. It should be understood that any form of product having a function of the first device in FIG. 15, any form of product having a function of the remote device in FIG. 15, any form of product having a function of the network device in FIG. 15, or any form of product having a function of the second device in FIG. 15 falls within the protection scope of embodiments of this application. It should be further understood that the following descriptions are merely an example, and product forms of the first device, the remote device, the network device, and the second device in embodiments of this application are not limited thereto.

In the communication apparatus shown in FIG. 15, the processing unit 1501 may be one or more processors, the sending unit 1502 may be a transmitter, and the receiving unit 1503 may be a receiver. The sending unit and the receiving unit are integrated into one component, for example, a transceiver. Alternatively, the processing unit 1501 may be one or more processors (or the processing unit 1501 may be one or more logic circuits), the sending unit 1502 may be an output interface, and the receiving unit 1503 may be an input interface. The input interface and the output interface may be integrated into one unit, for example, an input/output interface. Details are described below.

In a possible implementation, in the communication apparatus shown in FIG. 15, the processing unit 1501 may be one or more processors, and the sending unit 1502 and the receiving unit 1503 are integrated into one component, for example, a transceiver. In this embodiment of this application, the processor and the transceiver may be coupled, or the like. A connection manner between the processor and the transceiver is not limited in this embodiment of this application.

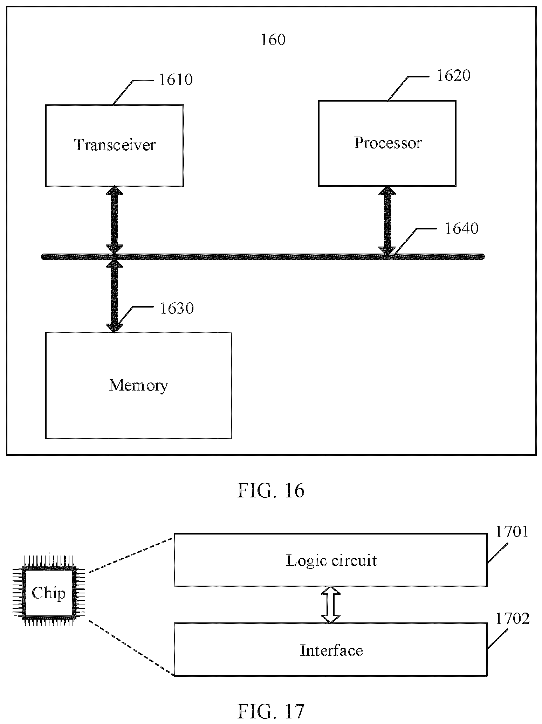

As shown in FIG. 16, a communication apparatus 160 includes one or more processors 1620 and a transceiver 1610.

For example, when the communication apparatus is configured to perform the step, the method, or the function performed by the first device, the processor 1620 is configured to determine first hop count information, and determine, based on the first hop count information, whether to send a first message; and the transceiver 1610 is configured to send the first message. Optionally, the transceiver 1610 is further configured to receive a second message. Optionally, the transceiver 1610 is further configured to send a third message. Optionally, the transceiver 1610 is further configured to receive a fourth message. Optionally, the transceiver 1610 is further configured to receive a fifth message, and send a sixth message. Optionally, the transceiver 1610 is further configured to receive a seventh message and forward the seventh message. Optionally, the transceiver 1610 is further configured to receive an eighth message and the like.

For example, when the communication apparatus is configured to perform the step, the method, or the function performed by the remote device, the transceiver 1610 is configured to receive a first message; and the processor 1620 is configured to determine, based on first hop count information, to set up a unicast connection to a first device. Optionally, the transceiver 1610 is further configured to send a second message. Optionally, the transceiver 1610 is further configured to send a fifth message. Optionally, the transceiver 1610 is further configured to receive a seventh message and the like.

For example, when the communication apparatus is configured to perform the step, the method, or the function performed by the network device, the transceiver 1610 is configured to receive a sixth message and send a seventh message. Optionally, the transceiver 1610 is further configured to send a fourth message and the like.

For example, when the communication apparatus is configured to perform the step, the method, or the function performed by the second device, the transceiver 1610 is configured to receive a third message; and the processor 1620 is configured to record a first identifier. Optionally, the transceiver 1610 is further configured to send an eighth message and the like.

It may be understood that, for specific descriptions of the first hop count information, the first message, the second message, the third message, the fourth message, the fifth message, the sixth message, the seventh message, the eighth message, and the like, refer to the foregoing method embodiments, such as related descriptions of the methods shown in FIG. 9, FIG. 10, FIG. 11, FIG. 12, FIG. 13, and FIG. 14. Details are not described herein again.

It may be understood that, for specific descriptions of the processor and the transceiver, refer to the descriptions of the processing unit, the sending unit, and the receiving unit shown in FIG. 15. Details are not described herein again.

In various implementations of the communication apparatus shown in FIG. 16, the transceiver may include a receiver and a transmitter, the receiver is configured to perform a receiving function (or operation), and the transmitter is configured to perform a transmitting function (or operation). The transceiver is configured to communicate with another device/apparatus through a transmission medium.

Optionally, the communication apparatus 160 may further include one or more memories 1630, configured to store program instructions and/or data. The memory 1630 is coupled to the processor 1620. The coupling in this embodiment of this application may be an indirect coupling or a communication connection between apparatuses, units, or modules in an electrical form, a mechanical form, or another form, and is used for information exchange between the apparatuses, the units, or the modules. The processor 1620 may cooperate with the memory 1630. The processor 1620 may execute the program instructions stored in the memory 1630. Optionally, at least one of the one or more memories may be included in the processor.

A specific connection medium between the transceiver 1610, the processor 1620, and the memory 1630 is not limited in this embodiment of this application. In this embodiment of this application, the memory 1630, the processor 1620, and the transceiver 1610 are connected by using a bus 1640 in FIG. 16. The bus is represented by using a thick line in FIG. 16. A manner of a connection between other components is merely an example for description, and imposes no limitation. The bus may be classified into an address bus, a data bus, a control bus, and the like. For ease of description, the bus in FIG. 16 is represented by only one thick line, but which does not indicate that there is only one bus or one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, any conventional processor, or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

The processor 1620 is mainly configured to process a communication protocol and communication data, control the entire communication apparatus, execute a software program, and process data of the software program. The memory 1630 is mainly configured to store the software program and data. The transceiver 1610 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1620 may read the software program in the memory 1630, interpret and execute instructions of the software program, and process the data of the software program. When data needs to be sent wirelessly, the processor 1620 performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the communication apparatus, the radio frequency circuit receives a radio frequency signal by using the antenna, converts the radio frequency signal into a baseband signal, and outputs the baseband signal to the processor 1620. The processor 1620 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus shown in this embodiment of this application may alternatively include more components than those shown in FIG. 16, or the like. This is not limited in this embodiment of this application. The methods performed by the processor and the transceiver are merely examples. For specific steps performed by the processor and the transceiver, refer to the methods described above.

**In** another possible implementation, in the communication apparatus shown in FIG. 15, the processing unit 1501 may be one or more logic circuits, the sending unit 1502 may be an output interface, and the receiving unit 1503 may be an input interface. The input interface and the output interface may be integrated into one unit, for example, an input/output interface. The input/output interface is also referred to as a communication interface, an interface circuit, an interface, or the like. As shown in FIG. 17, a communication apparatus shown in FIG. 17 includes a logic circuit 1701 and an interface 1702. To be specific, the processing unit 1501 may be implemented by using the logic circuit 1701, and the sending unit 1502 and the receiving unit 1503 may be implemented by using the interface 1702. The logic circuit 1701 may be a chip, a processing circuit, an integrated circuit, a system on chip (system on chip, SoC) chip, or the like. The interface 1702 may be a communication interface, an input/output interface, a pin, or the like. For example, FIG. 17 shows an example in which the communication apparatus is a chip. The chip includes the logic circuit 1701 and the interface 1702.

In this embodiment of this application, the logic circuit and the interface may be coupled to each other. A specific manner of connection between the logical circuit and the interface is not limited in this embodiment of this application.

For example, when the communication apparatus is configured to perform the method, the function, or the step performed by the first device, the logic circuit 1701 is configured to determine first hop count information, and determine, based on the first hop count information, whether to send a first message; and the interface 1702 is configured to output the first message. Optionally, the interface 1702 is further configured to input a second message. Optionally, the interface 1702 is further configured to output a third message. Optionally, the interface 1702 is further configured to input a fourth message. Optionally, the interface 1702 is further configured to input a fifth message and output a sixth message. Optionally, the interface 1702 is further configured to input a seventh message and output the seventh message. Optionally, the interface 1702 is further configured to input an eighth message.

For example, when the communication apparatus is configured to perform the method, the function, or the step performed by the remote device, the interface 1702 is configured to input a first message; and the logic circuit 1701 is configured to determine, based on first hop count information, to set up a unicast connection to a first device. Optionally, the interface 1702 is further configured to output a second message. Optionally, the interface 1702 is further configured to output a fifth message. Optionally, the interface 1702 is further configured to input a seventh message.

For example, when the communication apparatus is configured to perform the method, the function, or the step performed by the network device, the interface 1702 is configured to input a sixth message and output a seventh message. Optionally, the interface 1702 is further configured to output a fourth message.

For example, when the communication apparatus is configured to perform the step, the method, or the function performed by the second device, the interface 1702 is configured to input a third message; and the logic circuit 1701 is configured to record a first identifier. Optionally, the interface 1702 is further configured to output an eighth message and the like.

It may be understood that the communication apparatus shown in embodiments of this application may implement the methods provided in embodiments of this application in a form of hardware, or may implement the methods provided in embodiments of this application in a form of software. This is not limited in embodiments of this application.

It may be understood that, for specific descriptions of the first hop count information, the first message, the second message, the third message, the fourth message, the fifth message, the sixth message, the seventh message, the eighth message, and the like, refer to the foregoing method embodiments, such as related descriptions of the methods shown in FIG. 9, FIG. 10, FIG. 11, FIG. 12, FIG. 13, and FIG. 14. Details are not described herein again.

For the specific implementations of embodiments shown in FIG. 17, further refer to the foregoing embodiments. Details are not provided in detail herein again.

An embodiment of this application further provides a communication system. The communication system includes at least one of the following: a first device, a remote device, a network device, and a second device. The first device, the remote device, the network device, and the second device may be configured to perform the method in any one of the foregoing embodiments (as shown in FIG. 9, FIG. 10, FIG. 11, FIG. 12, FIG. 13, FIG. 14, and the like).

In addition, this application further provides a computer program. The computer program is for implementing the operation and/or processing performed by the first device in the method provided in this application.

This application further provides a computer program. The computer program is for implementing the operation and/or processing performed by the remote device in the method provided in this application.

This application further provides a computer program. The computer program is for implementing the operation and/or processing performed by the network device in the method provided in this application.

This application further provides a computer program. The computer program is for implementing the operation and/or processing performed by the second device in the method provided in this application.

This application further provides a computer-readable storage medium. The computer-readable storage medium stores computer code. When the computer code is run on a computer, the computer is enabled to perform the operation and/or processing performed by the first device in the method provided in this application.

This application further provides a computer-readable storage medium. The computer-readable storage medium stores computer code. When the computer code is run on a computer, the computer is enabled to perform the operation and/or processing performed by the remote device in the method provided in this application.

This application further provides a computer-readable storage medium. The computer-readable storage medium stores computer code. When the computer code is run on a computer, the computer is enabled to perform the operation and/or processing performed by the network device in the method provided in this application.

This application further provides a computer-readable storage medium. The computer-readable storage medium stores computer code. When the computer code is run on a computer, the computer is enabled to perform the operation and/or processing performed by the second device in the method provided in this application.

This application further provides a computer program product. The computer program product includes computer code or a computer program. When the computer code or computer program is run on a computer, the operation and/or processing performed by the first device in the method provided in this application is performed.

This application further provides a computer program product. The computer program product includes computer code or a computer program. When the computer code or computer program is run on a computer, the operation and/or processing performed by the remote device in the method provided in this application is performed.

This application further provides a computer program product. The computer program product includes computer code or a computer program. When the computer code or computer program is run on a computer, the operation and/or processing performed by the network device in the method provided in this application is performed.

This application further provides a computer program product. The computer program product includes computer code or a computer program. When the computer code or computer program is run on a computer, the operation and/or processing performed by the second device in the method provided in this application is performed.

An embodiment of this application further provides a chip or a chip system, including a processor, configured to perform the method in any one of the foregoing embodiments (as shown in FIG. 9, FIG. 10, FIG. 11, FIG. 12, FIG. 13, FIG. 14, and the like).

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual requirements to achieve the technical effects of the solutions provided in embodiments in this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first device, and comprising:
determining first hop count information, wherein the first hop count information indicates a quantity of relay devices of the first device, and the first device is connected to a network device via the relay device; and
determining, based on the first hop count information, whether to send a first message, wherein the first message indicates the first device to provide a relay service.

2. The method according to claim 1, wherein the first message comprises the first hop count information.

3. The method according to claim 1 or 2, wherein the determining, based on the first hop count information, whether to send a first message comprises:
determining, based on the first hop count information and a first threshold, whether to send the first message.

4. The method according to claim 3, wherein the determining, based on the first hop count information and a first threshold, whether to send the first message comprises:
determining, based on a result of comparing the first hop count information with the first threshold and a result of comparing first signal quality with a second threshold, whether to send the first message, wherein the first signal quality is signal quality of a communication link between the first device and a second device, and the second device is a relay device of the first device.

5. The method according to claim 4, wherein the determining, based on a result of comparing the first hop count information with the first threshold and a result of comparing first signal quality with a second threshold, whether to send the first message comprises:
when the first hop count information is greater than the first threshold and the first signal quality is greater than the second threshold, determining to send the first message; or
when the first hop count information is less than the first threshold or the first signal quality is less than the second threshold, determining not to send the first message.

6. The method according to any one of claims 3 to 5, wherein the method further comprises:
receiving a second message sent by a remote device, wherein the second message comprises the first threshold, and the second message is for requesting the relay service.

7. The method according to any one of claims 1 to 6, wherein the first device forwards data for the remote device, a first unicast connection and a second unicast connection exist between the first device and the second device, the first unicast connection is for transmitting data of the remote device, and the second unicast connection is for transmitting data of the first device.

8. The method according to any one of claims 1 to 6, wherein the first device forwards data for the remote device, bearers between the first device and the second device comprise a first bearer and a second bearer, the first bearer is for transmitting data of the remote device, and the second bearer is for transmitting data of the first device.

9. The method according to claim 1, wherein the method further comprises:
sending a third message to a second device, wherein the third message comprises a first identifier of a remote device, and the first identifier indicates the second device to forward data for the remote device.

10. The method according to claim 9, wherein the method further comprises:
receiving a fourth message sent by the network device, wherein the fourth message comprises the first identifier of the remote device, and the first identifier indicates the first device to forward data for the remote device.

11. The method according to claim 10, wherein the first device is a relay device of a third device, and the third device is a relay device of the remote device.

12. The method according to any one of claims 1 to 8, wherein the method further comprises:
receiving a fifth message sent by the remote device, wherein the fifth message comprises a paging identifier of the remote device, and the paging identifier indicates the first device to monitor paging for the remote device; and
sending a sixth message to the network device, wherein the sixth message is generated based on the fifth message, and the sixth message comprises a first identifier and the paging identifier of the remote device.

13. The method according to claim 12, wherein the method further comprises:
receiving a seventh message, wherein the seventh message is for paging the remote device, and the seventh message comprises the first identifier and the paging identifier; and
forwarding the seventh message to the remote device based on the first identifier.

14. The method according to claim 13, wherein the seventh message is further for paging a first relay device, the first relay device is a relay device of the remote device, and the remote device is connected to the network device via the first relay device.

15. The method according to any one of claims 1 to 14, wherein the determining first hop count information comprises:
receiving an eighth message sent by the second device, wherein the eighth message comprises second hop count information, and the second hop count information indicates a quantity of relay devices of the second device; and
determining the first hop count information based on the second hop count information.

16. A communication method, applied to a remote device, and comprising:
receiving a first message sent by a first device, wherein the first message comprises first hop count information, the first hop count information identifies a quantity of relay devices of the first device, and the first device is connected to a network device via the relay device; and
determining, based on the first hop count information, to set up a unicast connection to the first device.

17. The method according to claim 16, wherein the first hop count information is less than a first threshold, and the method further comprises:
sending a second message, wherein the second message is for requesting a relay service, and the second message comprises the first threshold.

18. The method according to claim 17, wherein the first threshold is determined based on a requirement on a delay of transmitting data of the remote device to the network device.

19. The method according to any one of claims 16 to 18, wherein the method further comprises:
sending a fifth message to the first device, wherein the fifth message comprises a paging identifier of the remote device, and the paging identifier indicates the first device to monitor paging for the remote device.

20. The method according to claim 19, wherein the method further comprises:
receiving a seventh message sent by the first device, wherein the seventh message comprises the paging identifier, and the seventh message is for paging the remote device.

21. The method according to claim 20, wherein the seventh message is further for paging a first relay device, the first relay device is a relay device of the remote device, and the remote device is connected to the network device via the first relay device.

22. A communication method, applied to a network device, and comprising:
receiving a sixth message sent by a first device, wherein the sixth message comprises a first identifier and a paging identifier of a remote device; and
sending a seventh message to the first device based on the first identifier, wherein the seventh message is for paging the remote device, and the seventh message comprises the first identifier and the paging identifier.

23. The method according to claim 22, wherein the seventh message is further for paging a first relay device, the first relay device is a relay device of the remote device, and the remote device is connected to the network device via the first relay device.

24. The method according to claim 22 or 23, wherein the method further comprises:
sending a fourth message to the first device, wherein the fourth message comprises the first identifier of the remote device, and the first identifier indicates the first device to forward data for the remote device.

25. The method according to claim 24, wherein the first device is a relay device of a third device, and the third device is a relay device of the remote device.

26. A communication method, applied to a second device, and comprising:
receiving a third message sent by a first device, wherein the third message comprises a first identifier of a remote device, the first identifier indicates the second device to forward data for the remote device, the second device is a relay device of the first device, and the first device is a relay device of the remote device; and
recording the first identifier.

27. The method according to claim 26, wherein the first device forwards data for the remote device, a first unicast connection and a second unicast connection exist between the first device and the second device, the first unicast connection is for transmitting data of the remote device, and the second unicast connection is for transmitting data of the first device.

28. The method according to claim 26, wherein the first device forwards data for the remote device, bearers between the first device and the second device comprise a first bearer and a second bearer, the first bearer is for transmitting data of the remote device, and the second bearer is for transmitting data of the first device.

29. The method according to claim 26, wherein the method further comprises:
sending an eighth message, wherein the eighth message comprises second hop count information, and the second hop count information indicates a quantity of relay devices of the second device.

30. A communication apparatus, comprising:
a processing unit, configured to determine first hop count information, wherein the first hop count information indicates a quantity of relay devices of a first device, and the first device is connected to a network device via the relay device, wherein
the processing unit is further configured to determine, based on the first hop count information, whether to send a first message, wherein the first message indicates the first device to provide a relay service; and
a transceiver unit, configured to send the first message when the first message is determined to be sent.

31. The apparatus according to claim 30, wherein the first message comprises the first hop count information.

32. The apparatus according to claim 30 or 31, wherein the processing unit is specifically configured to determine, based on the first hop count information and a first threshold, whether to send the first message.

33. The apparatus according to claim 32, wherein the processing unit is specifically configured to determine, based on a result of comparing the first hop count information with the first threshold and a result of comparing first signal quality with a second threshold, whether to send the first message, wherein the first signal quality is signal quality of a communication link between the first device and a second device, and the second device is a relay device of the first device.

34. The apparatus according to claim 33, wherein the processing unit is specifically configured to: when the first hop count information is greater than the first threshold and the first signal quality is greater than the second threshold, determine to send the first message; or
when the first hop count information is less than the first threshold or the first signal quality is less than the second threshold, determine not to send the first message.

35. The apparatus according to any one of claims 32 to 34, wherein the transceiver unit is further configured to receive a second message sent by a remote device, wherein the second message comprises the first threshold, and the second message is for requesting the relay service.

36. The apparatus according to any one of claims 30 to 35, wherein the first device forwards data for the remote device, a first unicast connection and a second unicast connection exist between the first device and the second device, the first unicast connection is for transmitting data of the remote device, and the second unicast connection is for transmitting data of the first device.

37. The apparatus according to any one of claims 30 to 35, wherein the first device forwards data for the remote device, bearers between the first device and the second device comprise a first bearer and a second bearer, the first bearer is for transmitting data of the remote device, and the second bearer is for transmitting data of the first device.

38. The apparatus according to claim 30, wherein the transceiver unit is further configured to send a third message to a second device, wherein the third message comprises a first identifier of a remote device, and the first identifier indicates the second device to forward data for the remote device.

39. The apparatus according to claim 38, wherein the transceiver unit is further configured to receive a fourth message sent by the network device, wherein the fourth message comprises the first identifier of the remote device, and the first identifier indicates the first device to forward data for the remote device.

40. The apparatus according to claim 39, wherein the first device is a relay device of a third device, and the third device is a relay device of the remote device.

41. The apparatus according to any one of claims 30 to 37, wherein the transceiver unit is further configured to receive a fifth message sent by the remote device, wherein the fifth message comprises a paging identifier of the remote device, and the paging identifier indicates the first device to monitor paging for the remote device; and
the transceiver unit is further configured to send a sixth message to the network device, wherein the sixth message is generated based on the fifth message, and the sixth message comprises a first identifier and the paging identifier of the remote device.

42. The apparatus according to claim 41, wherein the transceiver unit is further configured to receive a seventh message, wherein the seventh message is for paging the remote device, and the seventh message comprises the first identifier and the paging identifier; and
the transceiver unit is further configured to forward the seventh message to the remote device based on the first identifier.

43. The apparatus according to claim 42, wherein the seventh message is further for paging a first relay device, the first relay device is a relay device of the remote device, and the remote device is connected to the network device via the first relay device.

44. The apparatus according to any one of claims 30 to 43, wherein the transceiver unit is further configured to receive an eighth message sent by the second device, wherein the eighth message comprises second hop count information, and the second hop count information indicates a quantity of relay devices of the second device; and
the processing unit is specifically configured to determine the first hop count information based on the second hop count information.

45. A communication apparatus, comprising:
a transceiver unit, configured to receive a first message sent by a first device, wherein the first message comprises first hop count information, the first hop count information is for identifying a quantity of relay devices of the first device, and the first device is connected to a network device via the relay device; and
a processing unit, configured to determine, based on the first hop count information, to set up a unicast connection to the first device.

46. The apparatus according to claim 45, wherein the first hop count information is less than a first threshold, and the apparatus further comprises a sending unit, configured to send a second message, wherein the second message is for requesting a relay service, and the second message comprises the first threshold.

47. The apparatus according to claim 46, wherein the first threshold is determined based on a requirement on a delay of transmitting data of the remote device to the network device.

48. The apparatus according to any one of claims 45 to 47, wherein the transceiver unit is further configured to send a fifth message to the first device, wherein the fifth message comprises a paging identifier of the remote device, and the paging identifier indicates the first device to monitor paging for the remote device.

49. The apparatus according to claim 48, wherein the transceiver unit is further configured to receive a seventh message sent by the first device, wherein the seventh message comprises the paging identifier, and the seventh message is for paging the remote device.

50. The apparatus according to claim 49, wherein the seventh message is further for paging a first relay device, the first relay device is a relay device of the remote device, and the remote device is connected to the network device via the first relay device.

51. A communication apparatus, comprising:
a transceiver unit, configured to receive a sixth message sent by a first device, wherein the sixth message comprises a first identifier and a paging identifier of a remote device; and
a processing unit, configured to determine, based on the first identifier, to send a seventh message to the first device, wherein the seventh message is for paging the remote device, and the seventh message comprises the first identifier and the paging identifier.

52. The apparatus according to claim 51, wherein the seventh message is further for paging a first relay device, the first relay device is a relay device of the remote device, and the remote device is connected to the network device via the first relay device.

53. The apparatus according to claim 51 or 52, wherein the transceiver unit is further configured to send a fourth message to the first device, wherein the fourth message comprises the first identifier of the remote device, and the first identifier indicates the first device to forward data for the remote device.

54. The apparatus according to claim 53, wherein the first device is a relay device of a third device, and the third device is a relay device of the remote device.

55. A communication apparatus, comprising:
a transceiver unit, configured to receive a third message sent by a first device, wherein the third message comprises a first identifier of a remote device, the first identifier indicates the second device to forward data for the remote device, the second device is a relay device of the first device, and the first device is a relay device of the remote device; and
a processing unit, configured to record the first identifier.

56. The apparatus according to claim 55, wherein the first device forwards data for the remote device, a first unicast connection and a second unicast connection exist between the first device and the second device, the first unicast connection is for transmitting data of the remote device, and the second unicast connection is for transmitting data of the first device.

57. The apparatus according to claim 55, wherein the first device forwards data for the remote device, bearers between the first device and the second device comprise a first bearer and a second bearer, the first bearer is for transmitting data of the remote device, and the second bearer is for transmitting data of the first device.

58. The apparatus according to claim 55, wherein the transceiver unit is further configured to send an eighth message, wherein the eighth message comprises second hop count information, and the second hop count information indicates a quantity of relay devices of the second device.

59. A communication apparatus, comprising a processor and a memory, wherein
the memory is configured to store computer-executable instructions; and
the processor is configured to execute the computer-executable instructions, to perform the method according to any one of claims 1 to 15, the method according to any one of claims 16 to 21, the method according to any one of claims 22 to 25, or the method according to any one of claims 26 to 29.

60. A chip, comprising a processor, to perform the method according to any one of claims 1 to 15, the method according to any one of claims 16 to 21, the method according to any one of claims 22 to 25, or the method according to any one of claims 26 to 29.

61. A computer-readable storage medium, wherein the computer-readable storage medium is configured to store a computer program, and when the computer program is executed, the method according to any one of claims 1 to 15, the method according to any one of claims 16 to 21, the method according to any one of claims 22 to 25, or the method according to any one of claims 26 to 29 is performed.

62. A computer program product, wherein the computer program product comprises a computer program or computer code, and when the computer program or the computer code is run on a computer, the method according to any one of claims 1 to 15, the method according to any one of claims 16 to 21, the method according to any one of claims 22 to 25, or the method according to any one of claims 26 to 29 is performed.

63. A communication system, comprising at least one of the following: a first device, a remote device, a network device, and a second device, wherein the first device is configured to perform the method according to any one of claims 1 to 15, the remote device is configured to perform the method according to any one of claims 16 to 21, the network device is configured to perform the method according to any one of claims 22 to 25, and the second device is configured to perform the method according to any one of claims 26 to 29.
